(19)

Europäisches
Patentamt
European
Patent Office
Office européen
des brevets

(11) **EP 4 513 250 A1**

(12) **EUROPEAN PATENT APPLICATION**
published in accordance with Art. 153(4) EPC

(43) Date of publication:
**26.02.2025 Bulletin 2025/09**

(21) Application number: **22885080.6**

(22) Date of filing: **25.05.2022**

(51) International Patent Classification (IPC):
**G02B 27/01** (2006.01)   **B32B 17/10** (2006.01)

(52) Cooperative Patent Classification (CPC):
**B32B 17/10; G02B 27/01**

(86) International application number:
**PCT/CN2022/095074**

(87) International publication number:
**WO 2023/071170 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fuyao Glass Industry Group Co., Ltd.**
**Fuqing, Fujian 350300 (CN)**

(72) Inventors:
 • **HE, Changlong**
  **Fujian 350300 (CN)**
 • **GUAN, Jinliang**
  **Fujian 350300 (CN)**
 • **LI, Weijun**
  **Fujian 350300 (CN)**

(74) Representative: **Mewburn Ellis LLP**
**Aurora Building**
**Counterslip**
**Bristol BS1 6BX (GB)**

(54) **HEAD-UP DISPLAY SYSTEM AND DESIGN METHOD THEREFOR**

(57)    A head-up display system and a design method therefor are provided in the present disclosure. The head-up display system includes laminated glass and a projection assembly. The laminated glass includes a first transparent substrate, a second transparent substrate, and an intermediate adhesive layer. The first transparent substrate has a first surface and a second surface. The second transparent substrate has a third surface and a fourth surface. The intermediate adhesive layer is disposed between the first transparent substrate and the second transparent substrate, and used for adhering the second surface and the third surface. The laminated glass has at least one projection display region having an upper edge and a lower edge. The at least one projection display region each has a wedge-shaped cross-sectional shape in which a thickness of the laminated glass at the upper edge is larger than a thickness of the laminated glass at the lower edge when the laminated glass is mounted on a vehicle. The at least one projection display region each has a section in which a wedge angle continuously nonlinearly monotonically decreases in the direction from the lower edge to the upper edge. A ratio of a length of the section to a length of each of the at least one projection display region is not less than 70%. The projection assembly includes at least one projection light-source capable of projecting onto the at least one projection display region. Projection light emitted by the at least one projection light-source is incident onto the at least one projection display region to form a projection image.

FIG. 1

EP 4 513 250 A1

## Description

TECHNICAL FIELD

This disclosure relates to the field of vehicle, and in particular to a head-up display system and a design method therefor.

BACKGROUND

With the development of vehicle intelligence, head-up display (HUD) systems are more and more used in vehicles. Through the head-up display system, images, such as driving information, are displayed in front of a windshield in real time. The windshield is usually laminated glass, which requires an intermediate adhesive layer with a wedge angle to eliminate a secondary image formed by projecting onto the windshield. When the present windshield includes a high-reflective dielectric layer, such as a metal coating layer containing silver (Ag), modified polyethylene terephthalate (PET) with a high reflectivity, etc., reflection also occurs on the high-reflective dielectric layer and thus more secondary images are formed. When a driver sees two or more offset images at the same time, it will cause the images observed by the human eye to be blurred, with dizziness and poor experience. Due to the difference in height of each driver and the increasing number of head-up displays with different display distances or functions disposed on the vehicle, the intermediate adhesive layer with a single wedge angle has a poor effect on attenuating the secondary image formed by projecting onto the windshield, resulting in a poor quality of the head-up display image projected onto the windshield.

SUMMARY

A head-up display system is disclosed in the present disclosure. The head-up display system can solve a technical problem that a quality of a head-up display image projected onto a windshield is not high.

In a first aspect, a head-up display is provided in the present disclosure. The head-up display system includes laminated glass and a projection assembly. The laminated glass includes a first transparent substrate, a second transparent substrate, and an intermediate adhesive layer. The first transparent substrate has a first surface and a second surface. The second transparent substrate has a third surface and a fourth surface. The intermediate adhesive layer is disposed between the first transparent substrate and the second transparent substrate, and used for adhering the second surface and the third surface. The laminated glass has at least one projection display region having an upper edge and a lower edge. The at least one projection display region each has a wedge-shaped cross-sectional shape in which a thickness of the laminated glass at the upper edge is larger than a thickness of the laminated glass at the lower edge when the laminated glass is mounted on a vehicle. The at least one projection display region each has a section in which a wedge angle continuously non-linearly monotonically decreases in a direction from the lower edge to the upper edge. A ratio of a length of the section to a length of each of the at least one projection display region is not less than 70%. The projection assembly includes at least one projection light-source capable of projecting onto the at least one projection display region. Projection light emitted by the at least one projection light-source is incident onto the at least one projection display region to form a projection image.

In a second aspect, a design method for a head-up display system is further provided in the present disclosure. The design method for a head-up display system includes the following. A projection assembly and laminated glass are provided. Projection light emitted by the projection assembly is incident onto at least one projection display region on the laminated glass. An eyebox plane inside a vehicle is designed according to an observer inside the vehicle. At least one virtual image plane is designed, according to a projection image observed by the observer inside the vehicle through each of the at least one projection display region. The eyebox plane includes multiple eyebox sub-planes sequentially from high to low. The at least one virtual image plane each includes multiple virtual image sub-planes sequentially from low to high. Each virtual image sub-plane corresponds to one eyebox sub-plane. An observation lattice is selected on each eyebox sub-plane. A virtual-image lattice is selected on each virtual image sub-plane. A connection line of a point in the observation lattice and a point in the virtual-image lattice passes through a corresponding projection display region of the at least one projection display region. An intersection of the connection line and the corresponding projection display region is an incident point. Multiple first theoretical-wedge-angles of the laminated glass are calculated when projection images at corresponding incident points have no secondary image, according to the projection assembly, the laminated glass, and multiple connection lines. A first variation curve of wedge angles with distances from incident points to a bottom edge of the laminated glass is obtained by fitting, according to the multiple first theoretical-wedge-angles and distances from incident points corresponding to the multiple first theoretical-wedge-angles to the bottom edge of the laminated glass. A wedge angle of the laminated glass in a corresponding projection display region of the at least one projection display region is determined according to the first variation curve.

The head-up display system provided in the present disclosure includes the laminated glass and the projection assembly. According to the wedge-shaped cross-sectional shape in which the thickness at the upper edge is larger than the thickness at the lower edge and the wedge angle continuously non-linearly monotonically decreases in the direction from the lower edge to the upper edge, the laminated glass can attenuate or even eliminate a secondary image of each of head-up display images formed through multiple projection display regions. Thus, the quality of the head-up display image projected onto the laminated glass is improved. The driver can also switch between multiple head-up display images, for observation. The driving safety and comfort can be further improved. Therefore, the head-up display system provided in the present disclosure can improve the quality of the head-up display image.

BRIEF DESCRIPTION OF THE DRAWINGS

To describe the technical solutions in embodiments of the present disclosure more clearly, the accompanying drawings for use in embodiments are briefly described below. Apparently, the accompanying drawings in the following description show merely some embodiments of the present disclosure, and those of ordinary skill in the art may obtain other accompanying drawings from these accompanying drawings without creative effort.

FIG. 1 is a schematic structural view of a head-up display system provided in an implementation of the present disclosure.
FIG. 2 is a schematic cross-sectional view of laminated glass in the head-up display system provided in the implementation in FIG. 1, taken along line A-A.
FIG. 3 is an imaging schematic view of a first projection image in the head-up display system provided in the implementation in FIG. 1.
FIG. 4 is a wedge-angle variation curve of laminated glass in the head-up display system provided in the implementation in FIG. 1.
FIG. 5 is a schematic structural view of an intermediate adhesive layer in the head-up display system provided in the implementation in FIG. 1.
FIG. 6 is a schematic structural view of a head-up display system provided in another implementation of the present disclosure.
FIG. 7 is a schematic view of calculation of a wedge angle at any point of laminated glass provided in an implementation of the present disclosure.
FIG. 8 is a schematic view of a combination of eyebox sub-plane-virtual image sub-plane provided in an implementation of the present disclosure.
FIG. 9 is a schematic view of a first variation curve provided in an implementation of the present disclosure.
FIG. 10 is a schematic view of a fitting curve provided in another implementation of the present disclosure.
FIG. 11 is a schematic view of a fitting curve provided in yet another implementation of the present disclosure.
FIG. 12 is a schematic structural view of a head-up display system provided in yet another implementation of the present disclosure.

FIG. 13 is a schematic view of projecting onto a second projection-display-region in the head-up display system provided in the implementation in FIG. 12.
FIG. 14 is a schematic structural view of a head-up display system provided in yet another implementation of the present disclosure.
FIG. 15 is a schematic structural view of the head-up display system provided in the implementation in FIG. 14 from another perspective.
FIG. 16 is a schematic view of projection imaging according to an implementation of the head-up display system provided in the implementation in FIG. 12.
FIG. 17 is a schematic view of projection imaging according to another implementation of the head-up display system provided in the implementation in FIG. 12.
FIG. 18 is a schematic view of projection imaging according to yet another implementation of the head-up display system provided in the implementation in FIG. 12.
FIG. 19 is a schematic view of a wedge-angle scatter data set provided in an implementation of the present disclosure.
FIG. 20 is a schematic view of a section line of laminated glass provided in an implementation of the present disclosure.
FIG. 21 is a schematic view of a wedge-angle scatter data set provided in another implementation of the present disclosure.
FIG. 22 is a schematic view of curves of wedge angles varying with virtual image distances under different longitudinal radii of curvature provided in an implementation of the present disclosure.
FIG. 23 is a schematic view of wedge angles varying with first look-down-angles under different longitudinal radii of curvature and different virtual image distances provided in an implementation of the present disclosure.
FIG. 24 is a flow chart of a design method for a head-up display system provided in an implementation of the present disclosure.
FIG. 25 is a schematic view of the design method for a head-up display system provided in the implementation in FIG. 24.
FIG. 26 is a schematic view of a first variation curve in the design method for a head-up display system provided in the implementation in FIG. 24.
FIG. 27 is a schematic view of an eyebox plane and a first virtual-image-plane in the design method for a head-up display system provided in the implementation in FIG. 24.
FIG. 28 is a schematic view of a first variation curve calculated by a design method for a head-up display system provided in an implementation of the present disclosure.
FIG. 29 is a schematic view of optimal design of two first variation curves in a design method for a head-up display system provided in an implementation of the present disclosure.

FIG. 30 is a schematic view of a second variation curve calculated by a design method for a head-up display system provided in an implementation of the present disclosure.

FIG. 31 is a schematic view of optimization of a first variation curve and a second variation curve provided in an implementation of the present disclosure.

Description of reference signs of the accompanying drawings: head-up display system 1; laminated glass 10; projection assembly 20; first transparent substrate 100; first surface 110; second surface 120; second transparent substrate 200; third surface 210; fourth surface 220; intermediate adhesive layer 300; top edge 10a; bottom edge 10b; projection light-source 201; first projection light-source 211; second projection light-source 212; folder mirror 230; concave mirror 240; projection display region 410; lower edge 420; upper edge 430; first projection-display-region 411; second projection-display-region 412; first projection image 4111; second projection image 4121; first left-projection-image 4111L; first right-projection-image 4111R; second left-projection-image 4121L; second right-projection-image 4121R; eyebox plane EB10; first virtual-image-plane TB20; second virtual-image-plane TB30; eyebox sub-plane EB11; first eyebox-sub-plane EB12; second eyebox-sub-plane EB13; third eyebox-sub-plane EB14; first virtual-image sub-plane TB21; first low virtual-image-plane TB22; first middle virtual-image-plane TB23; first high virtual-image-plane TB24; observation lattice EB111; first observation sub-lattice EB121; second observation sub-lattice EB131; third observation sub-lattice EB141; first virtual-image-lattice TB211; first low virtual-image-lattice TB221; first middle virtual-image lattice TB231; first high virtual-image-lattice TB241; second virtual-image sub-plane TB31; second virtual-image-lattice TB311; observer eye E10; first variation curve L1; second variation curve L2; first discrete graph T10; discrete sub-graph T11; first discrete sub-graph T12; second discrete sub-graph T13; third discrete sub-graph T14.

DETAILED DESCRIPTION

The following will clearly and completely describe technical solutions of embodiments of the present disclosure with reference to the accompanying drawings. Apparently, embodiments described herein are merely some embodiments, rather than all embodiments. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that particular features, structures, or properties described in conjunction with implementations may be defined in at least one embodiment of the present disclosure. The phrase "implementation" appearing in various places in the specification does not necessarily refer to the same embodiment or an independent/alternative embodiment that is mutually exclusive with other embodiments. Those skilled in the art will understand expressly and implicitly that an embodiment described in the present disclosure may be combined with other embodiments

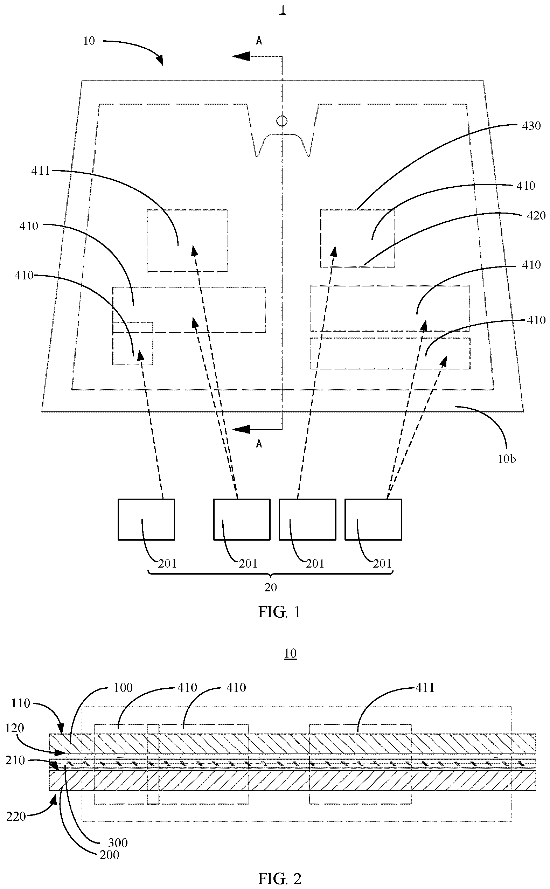

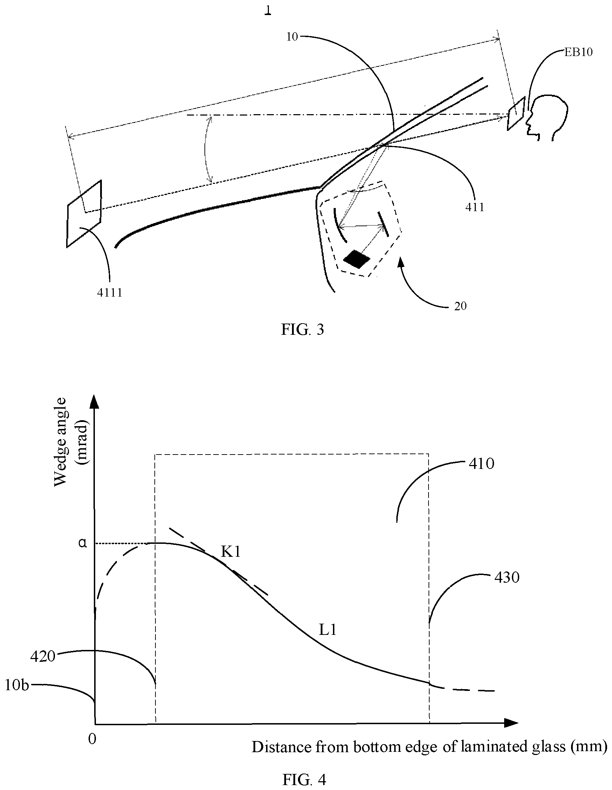

A head-up display system 1 is provided in an implementation of the present disclosure. Reference can be made to FIG. 1, FIG. 2, FIG. 3, and FIG. 4, where FIG. 1 is a schematic structural view of a head-up display system provided in an implementation of the present disclosure; FIG. 2 is a schematic cross-sectional view of laminated glass in the head-up display system provided in the implementation in FIG. 1, taken along line A-A; FIG. 3 is an imaging schematic view of a first projection image in the head-up display system provided in the implementation in FIG. 1; and FIG. 4 is a wedge-angle variation curve of laminated glass in the head-up display system provided in the implementation in FIG. 1. The head-up display system 1 includes laminated glass 10 and a projection assembly 20. The laminated glass 10 includes a first transparent substrate 100, a second transparent substrate 200, and an intermediate adhesive layer 300. The first transparent substrate 100 has a first surface 110 and a second surface 120. The second transparent substrate 200 has a third surface 210 and a fourth surface 220. The intermediate adhesive layer 300 is disposed between the first transparent substrate 100 and the second transparent substrate 200, and is used for adhering the second surface 120 and the third surface 210. The laminated glass 10 has at least one projection display region 410 has an upper edge 430 and a lower edge 420. The projection display region 410 has a wedge-shaped cross-sectional shape in which a thickness of the laminated glass 10 at the upper edge 430 is larger than a thickness of the laminated glass 10 at the lower edge 420 when the laminated glass 10 is mounted on a vehicle.

The at least one projection display region 410 each has a section in which a wedge angle continuously non-linearly monotonically decreases in a direction from the lower edge 420 to the upper edge 430. A ratio of a length of the section to a length of each of the at least one projection display region 410 is not less than 70%. In can be understood that in each projection display region 410, each of wedge angles of other sections except the section may be equal to 0, may be constant, may linearly increase or linearly decrease, or may continuously non-linearly monotonically decrease together with the wedge angle in the section. Preferably, the ratio of the length of the section to the length of the projection display region 410 is not less than 75%, or not less than 80%, or not less than 85%, or not less than 90%, or not less than 95%, or equal to 100%. Preferably, a wedge angle in each projection display region 410 continuously non-linearly monotonically decrease in the direction from the lower edge 420 to the upper edge 430. The length is measured in the direction from the lower edge 420 to the upper edge 430.

For example, the projection display region 410 includes at least one first projection-display-region 411. The projection assembly 20 includes at least one projection light-source 201 projecting onto multiple projection display regions 410. The projection light emitted by the at least one projection light-source 201 is incident onto the at least one first projection-display-region 411 to form a first projection image 4111.

In this implementation, the head-up display system 1 is applied to information display on a windshield of the vehicle. The head-up display system 1 includes the projection assembly 20. Images projected by the projection assembly 20 to the multiple projection display regions 410 include head-up display (HUD) images of multiple types, HUD images with multiple angles, HUD images with multiple display distances, HUD images of multiple types and HUD images with multiple angles, HUD images of multiple types and HUD images with multiple display distances, HUD images with multiple angles and HUD images with multiple display distances, or HUD images of multiple types and HUD images with multiple angles and HUD images with multiple display distances, so that the head-up display system 1 has a multi-information display function, thereby increasing richness of the image display of the head-up display system 1. The multiple projection display regions 410 are used for displaying HUD images. Specifically, the multiple projection display regions 410 may be used for providing augmented reality head-up display (AR-HUD), windshield head-up display (W-HUD), or the like.

In this implementation, the projection assembly 20 includes the at least one projection light-source 201 projecting onto the multiple projection display regions 410. One projection light-source 201 corresponds to one projection display region 410, or one projection light-source 201 corresponds to multiple projection display regions 410. In an implementation, light emitted by the projection light-source 201 is directly projected onto the projection display region 410. In another implementation, light emitted by the projection assembly 20 is projected onto the projection display region 410 through a reflection device.

In this implementation, wedge angles of the laminated glass 10 at the multiple projection display regions 410 are used for eliminating secondary images when the light emitted by the projection assembly 20 is incident onto the multiple projection display regions 410 to form a projection image. Specifically, that the laminated glass 10 is applied to the vehicle is taken as an example for illustration. When the projection assembly 20 projects the light that forms the first projection image 4111 to the projection display region 410, since the laminated glass 10 has a certain thickness, an image formed by the light being reflected on the first transparent substrate 100 to an observer eye E10 in a cab and an image formed by the light being reflected on the second transparent substrate 200 to the observer eye E10 both have secondary images. When the laminated glass 10 further includes a high-reflective dielectric layer, such as a metal coating layer containing silver (Ag), modified polyethylene terephthalate (PET) with a high reflectivity, etc., reflection occurs and more secondary images are formed. To eliminate the secondary image, the laminated glass 10 needs to set corresponding wedge angles in the multiple projection display regions 410, so that the secondary image can overlap the primary image, and thus the observer can see the first projection image 4111 without the secondary image through the projection display region 410. The light corresponding to the first projection image 4111 is reflected on different regions of the multiple projection display regions 410 to enter the observer eye E10 at different angles. In addition, due to different sitting positions of the observer in the cab, the first projection image 4111 also enters the observer eye E10 at different angles. Therefore, different wedge angles need to be set in different regions of the multiple projection display regions 410 of the laminated glass 10.

In this implementation (referring to FIG. 4), each projection display region 410 has a wedge-shaped cross-sectional shape in which the thickness of the laminated glass 10 at the upper edge 430 of the laminated glass 10 is larger than the thickness of the laminated glass 10 at the lower edge 420 of the laminated glass 10 when the laminated glass 10 is mounted on the vehicle, and the wedge angle continuously non-linearly monotonously decreases in the direction from the lower edge 420 to the upper edge 430. For example, a wedge angle of the laminated glass 10 in each projection display region 410 gradually decreases non-linearly as a function of second-order to fifth-order in the direction from the lower edge 420 to the upper edge 430. In FIG. 4, the first variation curve L1 is a variation curve of the wedge angle of the laminated glass 10 in one projection display region 410 with the distance from the bottom edge 10b of the laminated glass 10. The wedge angle of the laminated glass 10 in each projection display region 410 gradually decreases non-linearly in the direction from the lower edge 420 to the upper edge 430, to attenuate or even eliminate the secondary image of the head-up display image in each projection display region 410.

In the related art, the variation of the wedge angle of the laminated glass 10 in the multiple projection display regions 410 is only designed by splicing several linear sections with wedge angles, or performing a simple arc transition at the bending of the spliced linear sections based on the design of splicing several linear sections with wedge angles. As a result, the problem of the secondary images of the head-up display images in multiple projection display regions 410 cannot be solved.

Compared with the related art, the head-up display system is provided in this implementation. The head-up display system 1 includes laminated glass 10 and multiple projection assemblies 20. According to the wedge-shaped cross-sectional shape in which the thickness at the upper edge 430 is larger than the thickness at the lower edge 420 and the wedge angle continuously non-linearly monotonously decreases in the direction from the lower edge 420 to the upper edge 430, the laminated glass 10 can attenuate or even eliminating the secondary image of each of head-up display images formed through the at least one projection display region 410. Thus, the quality of the head-up display image projected onto the laminated glass is improved. The driver can also switch between multiple head-up display images, for observation. The driving safety and comfort can be further improved. Therefore, the head-up display system provided in the present disclosure can improve the quality of the head-up display image.

Referring to FIG. 4 again, in this implementation, a maximum rate of change (ROC) of the continuous non-linear monotonic decrease of the wedge angle in the projection display region 410 may satisfy: ROC ≤ 0.3 mrad/100 mm, or ROC ≤ 0.2 mrad/100 mm, or ROC ≤ 0.1 mrad/100 mm, or ROC ≤ 0.05 mrad/100 mm.

In this implementation, in FIG. 4, L1 represents a variation curve of the wedge angle of the laminated glass 10 in each projection display region 410 with the distance from the bottom edge 10b of the laminated glass 10. K1 represents a tangent to L1 at a certain point, and a slope of the tangent indicates an absolute value of the ROC of the wedge angle decrease at the point. If the maximum ROC of the wedge angle of the laminated glass 10 is too large, the production and manufacturing difficulty of the laminated glass 10 and the production cost of the laminated glass 10 may be increased, which is not conducive to the production efficiency of the laminated glass 10, thereby affecting the production efficiency of the laminated glass 10. Therefore, the maximum ROC of the wedge angle of the laminated glass 10 may not be suitable to be too large. Specifically, the maximum ROC of the continuous non-linear monotonic decrease of the wedge angle in the direction from the lower edge 420 to the upper edge 430 in each of the multiple projection display regions 410 may satisfy: ROC ≤ 0.3 mrad/100 mm. Preferably, the maximum ROC of the continuous non-linear monotonic decrease of the wedge angle in the direction from the lower edge 420 to the upper edge 430 in each of the multiple projection display regions 410 may satisfy: ROC ≤ 0.2 mrad/100 mm. More preferably, the maximum ROC of the continuous non-linear monotonic decrease of the wedge angle in the direction from the lower edge 420 to the upper edge 430 in each of the multiple projection display regions 410 may satisfy: ROC ≤ 0.1 mrad/100 mm. Further preferably, the maximum ROC of the continuous non-linear monotonic decrease of the wedge angle in the direction from the lower edge 420 to the upper edge 430 in each of the multiple projection display regions 410 may satisfy: ROC ≤ 0.05 mrad/100 mm.

Referring to FIG. 4 again, in this implementation, the maximum wedge angle α in the multiple projection display regions 410 may satisfy: α ≤ 0.8 mrad.

In this implementation, α in FIG. 4 represents the maximum wedge angle of the laminated glass 10 in the multiple projection display regions 410. If the wedge angle of the laminated glass 10 is too large, the laminated glass 10 may be too thick in a local region, which increases the difficulty in eliminating the secondary image of the head-up display image on the multiple projection display regions 410. In addition, if the wedge angle of the laminated glass 10 is too large, it is easy to cause the ROC of the wedge angle of the laminated glass 10 to be too large, thereby increasing the production and manufacturing difficulty and production cost of the laminated glass 10, which is not conducive to the production efficiency of the laminated glass 10. Therefore, the wedge angle of the laminated glass 10 may not be too large. Specifically, the maximum wedge angle α of the laminated glass 10 in the multiple projection display regions 410 may satisfy: α ≤ 0.8 mrad.

In the present disclosure, the wedge angles in the multiple projection display regions 410 may be provided only by the intermediate adhesive layer 300. In other words, the first transparent substrate 100 and the second transparent substrate 200 each have a uniform thickness shape (i.e., the wedge angle is equal to 0), and the wedge angle of the projection display region 410 is equal to the wedge angle of the intermediate adhesive layer 300. Without being limited to thereto, the wedge angle in the multiple projection display regions 410 may also be provided by the intermediate adhesive layer 300, and the first transparent substrate 100 and/or the second transparent substrate 200. In other words, the first transparent substrate 100 and/or the second transparent substrate 200 may also have a wedge shape. Considering the production difficulty of the first transparent substrate 100 and/or the second transparent substrate 200, the wedge angle of the first transparent substrate 100 and/or the second transparent substrate 200 is set to be a constant wedge angle, and the wedge angle in the projection display region 410 is equal to the sum of the wedge angle of the intermediate adhesive layer 300 and the wedge angle of the first transparent substrate 100 and/or the second transparent substrate 200.

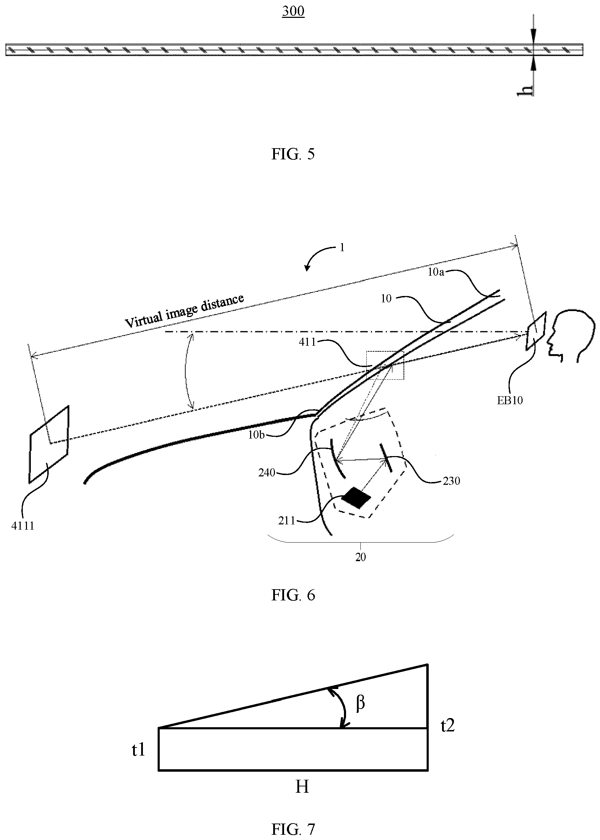

Reference can be made to FIG. 5, which is a schematic structural view of an intermediate adhesive layer in the head-up display system provided in the implementation in FIG. 1. In this implementation, the maximum thickness h of the intermediate adhesive layer 300 may satisfy: 0.38 mm ≤ h ≤ 1.6 mm.

In this implementation, the thickness of the laminated glass 10 is related to the thickness of the intermediate adhesive layer 300. In other words, when the intermediate adhesive layer 300 is thicker, the laminated glass 10 is thicker. When the laminated glass 10 is thicker, the problem of the secondary image formed by the head-up display image projected onto the multiple projection display regions 410 is more serious, and thus the difficulty in producing the laminated glass 10 for reducing the secondary image formed along with the head-up display image projected onto the multiple projection display regions 410 is increased. Therefore, the laminated glass 10 shall not be too thick, that is, the maximum thickness of the intermediate adhesive layer 300 shall not be too thick. Specifically, the maximum thickness h of the intermediate adhesive layer 300 may satisfy: h ≤ 1.6 mm. In addition, the laminated glass 10 needs to meet the requirements of penetration resistance and impact resistance in the regulatory requirements, that is, the maximum thickness of the intermediate adhesive film may not be too thin. Specifically, the maximum thickness h of the intermediate adhesive layer 300 may satisfy: h ≥ 0.38 mm. Therefore, the thickness h of the intermediate adhesive layer 300 may satisfy: 0.38 mm ≤ h ≤ 1.6 mm.

In an implementation, the section has a measured wedge angle at any point in the section. Measured wedge angles at all points in the section are fitted to obtain an actual wedge-angle fitting curve. The projection display region has multiple theoretical wedge angles for eliminating secondary images at any point in the projection display region. Multiple theoretical wedge angles at all points in the projection display region are fitted to obtain a first variation curve L1. A maximum deviation between the actual wedge-angle fitting curve and a part of the first variation curve L1 corresponding to the actual wedge-angle fitting curve is less than or equal to 0.15 mrad.

Specifically, reference can be made to FIG. 6, which is a schematic structural view of a head-up display system provided in another implementation of the present disclosure. The projection assembly 20 further includes a folder mirror 230 and a concave mirror 240. When a first projection light-source 211 operates, the first projection light-source 211 converts information such as vehicle speed and navigation of an instrument signal into optical signals, and emits the optical signals to the fourth surface 220 of the second transparent substrate 200 of the laminated glass 10 through the folder mirror 230 and the concave mirror 240. After being reflected on the laminated glass 10, the optical signals are incident onto a corresponding eyebox plane EB10, to image on a first virtual-image-plane TB20 in front of the laminated glass 10, thereby forming a first virtual image, which is called a primary image.

It may be noted that the virtual image plane at least includes the first virtual-image-plane TB20. When there are multiple projection display regions 410, the virtual image plane may further include a second virtual-image-plane TB30. In the present disclosure, that the virtual image plane includes the first virtual-image-plane TB20 is taken as an example for illustration, and the situation where there are multiple virtual image planes can be derived with reference to the characteristics of the first virtual-image-plane TB20.

It can be understood that an optical path of each light ray emitted by the first projection light-source 211 is unique. In other words, when observed at different positions on the same eyebox plane EB10, the observed light paths of the light rays emitted by the first projection light-source 211 are different, and a projection region of these light rays on the laminated glass 10 may be equivalent to the first projection-display-region 411 of the laminated glass 10.

In this implementation, since the laminated glass 10 is made of a transparent dielectric, after the light emitted by the first projection light-source 211 enters the laminated glass 10, the light emitted by the first projection light-source 211 is reflected again on the outer surface of the laminated glass 10 to enter the eyebox plane EB10, to image in front of the laminated glass 10, thereby forming a second virtual image. When the laminated glass 10 includes a high-reflective dielectric layer, such as a metal coating layer containing Ag, a modified PET with a high reflectivity, etc., reflection also occurs and third or more virtual images are formed. The second virtual image, the third virtual image, and even more virtual images are collectively referred to as secondary images. To eliminate the secondary image, a corresponding wedge angle, that is, a theoretical wedge angle, is set in the laminated glass 10, so that the secondary image completely overlaps the primary image. It can be understood that that the light emitted by the first projection light-source 211 is different, and theoretical wedge angles required to eliminate the secondary image are also different, so different wedge angles need to be set at different positions in the laminated glass 10. In other words, at any position on the laminated glass 10 from the bottom edge 10b, the theoretical wedge angles for eliminating the secondary image are within a certain interval, and there are a maximum theoretical wedge angle and a minimum theoretical wedge angle.

Reference can be made to FIG. 7, which is a schematic view of calculation of a wedge angle at any point of laminated glass provided in an implementation of the present disclosure. It can be understood that the wedge angle at any point of the laminated glass 10 reflects a thickness change rate of the laminated glass 10 at that point. As illustrated in FIG. 7, if a thickness of the laminated glass 10 at a certain point of the laminated glass 10 is t1, and a thickness of the laminated glass 10 at a position at a distance H from the point in a direction from the bottom edge 10b of the laminated glass 10 to the top edge 10a of the laminated glass 10 is t2, a wedge angle of the point can be calculated according to the formula $\beta=\arctan((t2-t1)/H)$, where H tends to be infinitesimal.

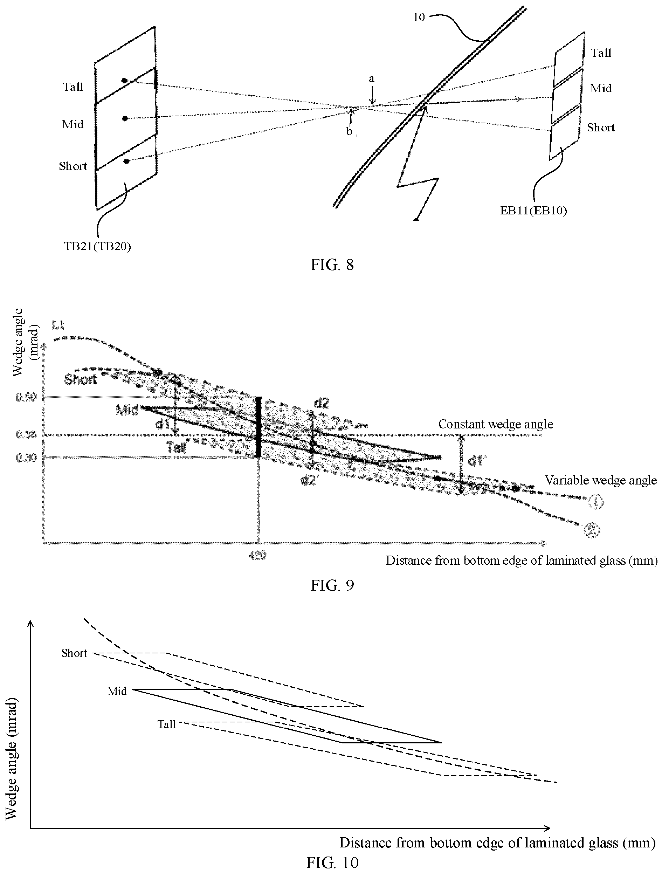

In this implementation, reference can be made to FIG. 8, which is a schematic view of a combination of eyebox sub-plane-virtual image sub-plane provided in an implementation of the present disclosure. The eyebox plane EB10 includes multiple eyebox sub-planes EB11 sequentially from high to low. The first virtual-image-plane TB20 includes multiple first virtual-image sub-planes TB21 sequentially from low to high. Each first virtual-image sub-plane TB21 corresponds to one eyebox sub-plane EB11. An observation lattice EB111 is selected on each eyebox sub-plane EB11. A first virtual-image-lattice TB211 is selected on each first virtual-image sub-plane TB21. A connection line of a point in the observation lattice EB111 and a point in the first virtual-image-lattice TB211 passes through a corresponding first projection-display-region 411. An intersection of the connection line and the first projection-display-region 411 is an incident point. Multiple first theoretical-wedge-angles of the laminated glass 10 when first projection images 4111 at corresponding incident points have no secondary image are calculated, according to the projection assembly 20, the laminated glass 10, and multiple connection lines. A first variation curve L1 of a wedge angle with a distance from an incident point to the bottom edge 10b of the laminated glass is obtained by fitting, according to the multiple first theoretical-wedge-angles and distances from incident points corresponding to the multiple first theoretical-wedge-angles to the bottom edge 10b of the laminated glass. Further, a wedge angle of the laminated glass 10 in a corresponding first projection-display-region 411 can be determined according to the first variation curve L1.

It can be understood that the eyebox plane EB10 is used for simulating a position where the human eye or visual system observes a projection image. The first virtual-image-plane TB20 represents a position where the light emitted by the first projection light-source 211 is imaged, and the specification size of the first virtual-image-plane TB20 is usually represented by width*height, such as 400 mm*200 mm. Since the height and sitting posture of each person may be different, in the present disclose, positions of three eyebox sub-planes EB11, namely, an upper (Tall) eyebox sub-plane EB11, a middle (Mid) eyebox sub-plane EB11, and a lower (Short) eyebox sub-plane EB11 are taken as an example for analysis. Therefore, there are three first virtual-image sub-planes TB21, namely, a lower first virtual-image sub-plane TB21, a middle first virtual-image sub-plane TB21, and an upper first virtual-image sub-plane TB21, correspond to the upper eyebox sub-plane EB11, the middle eyebox sub-plane EB11, and the lower eyebox sub-plane EB11, respectively, to form three combinations of lower eyebox sub-plane EB11-upper first virtual-image sub-plane TB21, middle eyebox sub-plane EB11-middle first virtual-image sub-plane TB21, and upper eyebox sub-plane EB11-lower first virtual-image sub-plane TB21. It can be understood that according to an optical path connecting a point on a corresponding eyebox sub-plane EB11 and a corresponding point on a corresponding first virtual-image sub-plane TB21, there are also three different regions formed in the first projection-display-region 411.

Specifically, reference can be made to FIG. 9, which is a schematic view of a first variation curve provided in an implementation of the present disclosure. In this implementation, multiple sample points are selected on the eyebox sub-plane EB11 and multiple corresponding sample points are selected on the corresponding first virtual-image sub-plane TB21. The common way is as follows. The eyebox sub-plane EB11 is divided into a lattice of m*n at equal intervals, and the first virtual-image sub-plane TB21 is divided into a lattice of i*j at equal intervals. For example, the eyebox sub-plane EB11 is divided into a lattice of 5*3, and the first virtual-image sub-plane TB21 is also divided into a lattice of 5*3.

Specifically, the optical path of the connection line of a point on the eyebox sub-plane EB11 and a corresponding point on the corresponding first virtual-image sub-plane TB21 intersects a corresponding region of the first projection-display-region 411, to obtain a data point. By means of CAD software, such as ANSYS SPEOS®, ZEMAX® and other professional optical simulation software, or DASSAULT SYSTEM CATIA®, the theoretical wedge angle required to eliminate the secondary image of the data point can be simulated and calculated for any single beam of light. It can be understood that based on distances from the data points in different first projection display region 411 to the bottom edge 10b of the laminated glass 10, and the theoretical wedge angles required to eliminate the secondary images, a wedge-angle scatter data set as illustrated in FIG. 9 can be set up. A wedge-angle scatter data set Tall corresponds to the combination of upper eyebox sub-plane EB11-lower first virtual-image sub-plane TB21, a wedge-angle scatter data set Mid corresponds to the combination of middle eyebox sub-plane EB11-middle first virtual-image sub-plane TB21, and a wedge-angle scatter data set Short corresponds to the combination of lower eyebox sub-plane EB11-upper first virtual-image sub-plane TB21.

As illustrated in FIG. 9, it can be seen that in each region of each wedge-angle scatter data set, theoretical wedge angles required to eliminate secondary images are discrete in a certain law. At a certain position from the bottom edge 10b of the laminated glass 10, different light corresponds to different required wedge angles. For example, at a distance of 420 mm from the bottom edge 10b, the required wedge angle is between 0.30 mrad and 0.50 mrad. Obviously, there can only be one wedge angle of the laminated glass 10 at the same position, and the theoretical wedge angle required to eliminate the secondary image is in the range of the wedge-angle scatter data set at the position. According to the theoretical wedge angles corresponding to various positions of the laminated glass 10 in the wedge-angle scatter data set, a variable-wedge-angle curve can be fitted. The variable-wedge-angle curve runs through the wedge-angle scatter data set, and is characterized as a section of continuous non-linear monotonic decreasing wedge angles.

In this implementation, to ensure the effect of eliminating the secondary image by the wedge angle, it can be understood that the maximum deviation between the actual wedge-angle fitting curve and the part of the first variation curve L1 corresponding to the actual wedge-angle fitting curve is less than or equal to 0.15 mrad, such as, $\leq 0.15$ mrad, $\leq 0.14$ mrad, $\leq 0.13$ mrad, $\leq 0.12$ mrad, $\leq 0.11$ mrad, $\leq 0.10$ mrad, $\leq 0.09$ mrad, $\leq 0.08$ mrad, $\leq 0.17$ mrad, $\leq 0.06$ mrad, $\leq 0.05$ mrad, etc. Further, for the fitting of the entire section of the first variation curve L1 from the bottom edge 10b of the laminated glass 10 to the top edge 10a of the laminated glass 10, the complete first variation curve L1 may be fitted by appropriate fine adjustment in the tolerance range based on various sections of the first variation curve L1. In other words, the final complete first variation curve L1 may not completely overlap the curve fitted by the best variable wedge angle of each section.

In an implementation, the actual wedge-angle fitting curve and the first variation curve L1 each conform to a second-order to fifth-order function.

It can be understood that in this implementation, the actual wedge-angle fitting curve is obtained by fitting the measured wedge angle at each point with a second-order to fifth-order function. The first variation curve L1 is obtained by fitting the maximum theoretical wedge angle and the minimum theoretical wedge angle at each point with a second-order to fifth-order function. The maximum deviation between the actual wedge-angle fitting curve and the part of the first variation curve L1 corresponding to the actual wedge-angle fitting curve is less than or equal to 0.15 mrad. Therefore, the technical problem of excessive differences between the wedge angles at different positions of the laminated glass 10 can be solved.

In an implementation, reference can be made to FIG. 10, which is a schematic view of a fitting curve provided in another implementation of the present disclosure. A slope of a tangent at any point of a fitting curve continuously decreases in the direction from the lower edge 420 to the upper edge 430. The slope of the tangent at any point of the fitting curve indicates an absolute value of the ROC of the wedge angle decrease at the point. It can be understood that according to the above wedge-angle scatter data set, the fitting curve, that is, a concave curve, as illustrated in FIG. 10, can be fitted. Therefore, the laminated glass 10 of different specifications can be manufactured, and be adaptively mounted to different vehicles, which is not limited in the present disclosure.

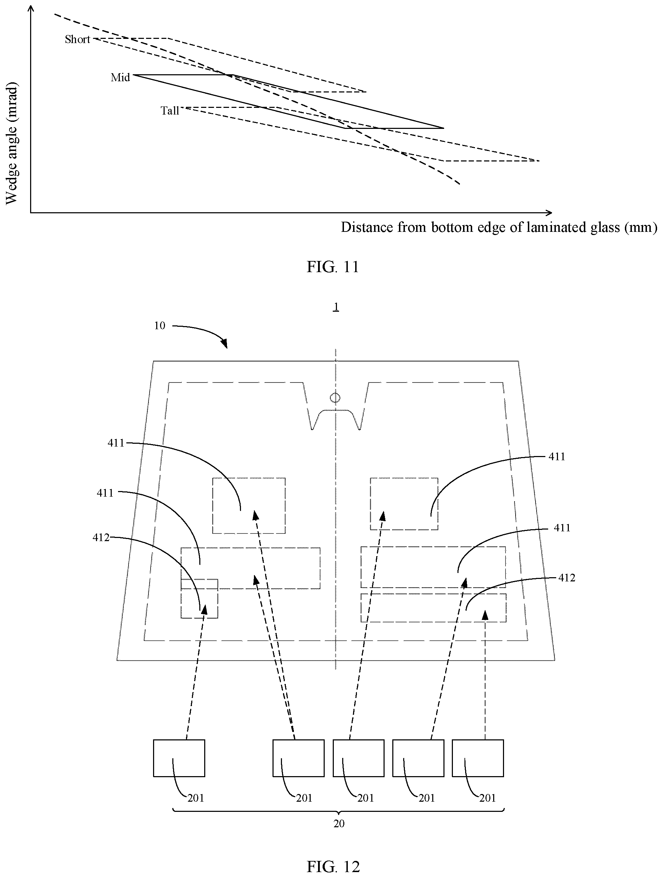

In an implementation, reference can be made to FIG. 11, which is a schematic view of a fitting curve provided in yet another implementation of the present disclosure. A slope of a tangent at any point of a fitting curve continuously increases in the direction from the lower edge 420 to the upper edge 430. The slope of the tangent at any point of the fitting curve indicates an absolute value of the ROC of the wedge angle decrease at the point. It can be understood that according to the above wedge-angle scatter data set, the fitting curve, that is, a convex curve, as illustrated in FIG. 11, can be fitted. Therefore, the laminated glass 10 of different specifications can be manufactured, and be adaptively mounted to different vehicles, which is not limited in the present disclosure.

In an implementation, referring to FIG. 9 again, a slope of a tangent at any point of the fitting curve continuously increases and then continuously decreases in the direction from the lower edge 420 to the upper edge 430. The slope of the tangent at any point of the fitting curve indicates an absolute value of the ROC of the wedge angle decrease at the point. It can be understood that according to the above wedge-angle scatter data set, the fitting curve, that is, an S-shaped curve, as illustrated in FIG. 9, can be fitted. Therefore, the laminated glass 10 of different specifications can be manufactured, and be adaptively mounted to different vehicles, which is not limited in the present disclosure.

In an implementation, a ratio of a maximum local range $\Delta W$ of the multiple theoretical wedge angles to a global range $\Delta C$ of the multiple theoretical wedge angles satisfies: $\Delta W/\Delta C \leq 0.9$.

Specifically, referring to FIG. 9 again, when the laminated glass 10 has a constant wedge angle, that is, when the wedge angles at different positions of the laminated glass 10 are equal, 0.38 mrad, for example, is used as the constant wedge angle. In this implementation, it may be noted that in the wedge-angle scatter data set of the scatter distribution plot of the theoretical wedge angles, the local range is a difference between a maximum theoretical wedge angle and a minimum theoretical wedge angle at a certain position where the distance from the lower edge 420 of the laminated glass 10 is X, and the maximum local range $\Delta W$ refers to the maximum among the local ranges. The global range $\Delta C$ of the multiple theoretical wedge angles refers to a difference between a maximum and a minimum among all theoretical wedge angles in the scatter distribution plot.

At the corresponding position of the laminated glass 10, when the maximum local range of the wedge-angle scatter data set is less than the maximum global range of the wedge-angle scatter data set, that is, when d2+d2'<d1+d1', the effect of eliminating the secondary image of the laminated glass 10 with the variable wedge angle is better than the effect of eliminating the secondary image of the laminated glass 10 with the constant wedge angle.

Optionally, the ratio of the maximum local range $\Delta W$ of the wedge-angle scatter data set to the global range $\Delta C$ of the wedge-angle scatter data set, at the corresponding position of the laminated glass 10, is less than or equal to 0.9, that is, $\Delta W/\Delta C \leq 0.9$, specifically such as 0.9, 0.8, 0.7, 0.6, 0.5, 0.4, 0.3, 0.2, 0.1, etc. It can be understood that based on $\Delta W/\Delta C \leq 0.9$, the present disclosure can reduce the discrete state of the wedge-angle scatter data set, reduce the maximum local range of the wedge-angle scatter data set at the corresponding position of the laminated glass 10, and improve the effect of eliminating the secondary image of the laminated glass 10.

In this implementation, referring to FIG. 6 again, the projection display region 410 includes at least one first projection-display-region 411. The light emitted by the projection assembly 20 is incident onto the at least one first projection-display-region 411 to form a first projection image 4111. The first projection image 4111 has a virtual image distance of 7 m to 100 m. In other words, a distance between the first projection image 4111 and the eyebox plane EB10 of the observer is 7 m to 100 m. Specifically, the first projection-display-region 411 is used for AR-HUD image display.

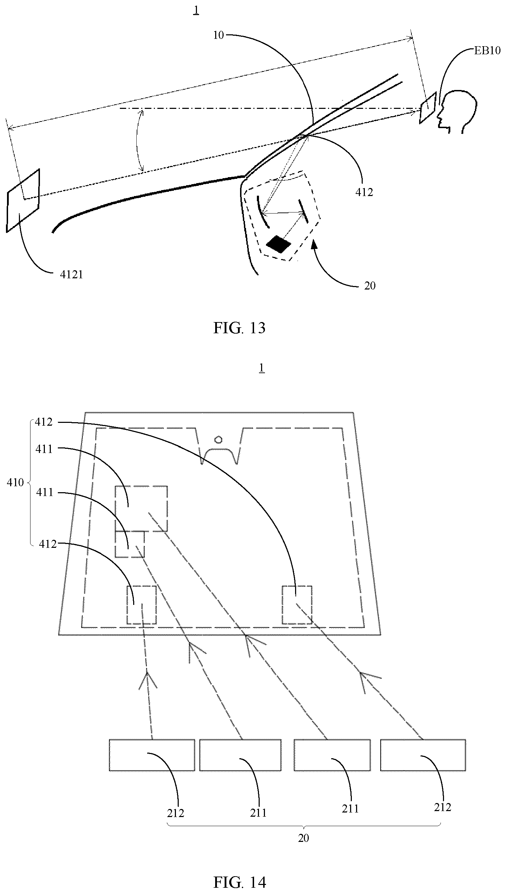

Reference can be made to FIG. 12 and FIG. 13, where is a schematic structural view of a head-up display system provided in yet another implementation of the present disclosure, and FIG. 13 is a schematic view of projecting onto a second projection-display-region in the head-up display system provided in the implementation in FIG. 12. In this implementation, the multiple projection display regions 410 further include at least one second projection-display-region 412. The light emitted by the projection light-source 201 is incident onto the at least one second projection-display-region 412 to form a second projection image 4121. The second projection image 4121 has a virtual image distance of 1 m to 6 m.

In this implementation, the first projection-display-region 411 is used for long-range projection display. Specifically, the first projection-display-region 411 is used for fusing display information and a real scene, and is used for projecting and displaying a complex graphic corresponding to an object in the real world, so that the interaction of road condition-vehicle-driver can be realized. The second projection-display-region 412 is used for short-range projection display. Specifically, the second projection-display-region 412 is used for short-range display for parameter information of vehicle operation, which can reduce times of looking down at a dashboard or related information, facilitate the driver eye to switch between far and near, reduce the times of looking down at the dashboard, concentrate the attention of the driver to the greatest extent when driving, and improve driving safety.

Reference can be made to FIG. 14, which is a schematic structural view of a head-up display system provided in yet another implementation of the present disclosure. In this implementation, the multiple projection assemblies 20 include at least one first projection light-source 211 and at least one second projection light-source 212. The at least one first projection light-source 211 is incident onto the at least one first projection-display-region 411. The at least one second projection light-source 212 is incident onto the at least one second projection-display-region 412.

In this implementation, the first projection light-source 211 is configured to project onto the first projection-display-region 411 for long-range projection display. Specifically, the first projection-display-region 411 is used for fusing display information and a real scene, and is used for projecting and displaying a complex graphic corresponding to an object in the real world, so that the interaction between road conditions-vehicle-driver can be realized. The second projection light-source 212 is configured to project onto the second projection-display-region 412 for short-range projection display. Specifically, the second projection-display-region 412 is used for short-range display for parameter information of vehicle operation, which can reduce times of looking down at the dashboard or related information, facilitate the driver eye to switch between far and near, reduce the times of looking down at the dashboard, concentrate the attention of the driver to the greatest extent when driving, and improve driving safety.

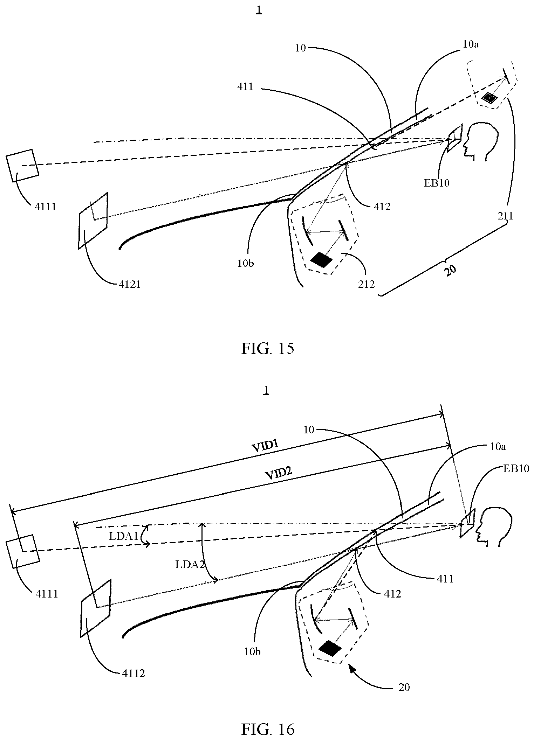

Reference can be made to FIG. 15, which is a schematic structural view of the head-up display system provided in the implementation in FIG. 14 from another perspective. In this implementation, the first projection light-source 211 is disposed close to the top edge 10a of the laminated glass 10. The second projection light-source 212 is disposed close to the bottom edge 10b of the laminated glass 10.

In this implementation, the first projection light-source 211 is disposed close to the top edge 10a of the laminated glass 10, so that the projection light emitted by the first projection light-source 211 to the first projection-display-region 411 can maintain an optimal incidence angle. Specifically, the first projection light-source 211 is mounted on an inner surface of a roof of the vehicle. The second projection light-source 212 is disposed close to the bottom edge 10b of the laminated glass 10, so that the projection light emitted by the second projection light-source 212 to the second projection-display-region 412 can maintain an optimal incidence angle. Specifically, the second projection light-source 212 is mounted inside a dashboard of the vehicle.

Reference can be made to FIG. 12 and FIG. 16, where FIG. 16 is a schematic view of projection imaging according to an implementation of the head-up display system provided in the implementation in FIG. 12. In this implementation, the first projection image 4111 has a first look-down-angle $LDA1$ and a first virtual-image-distance $VID1$. The second projection image 4121 has a second look-down-angle $LDA2$ and a second virtual-image-distance $VID2$. When the first projection-display-region 411 is disposed adjacent to the second projection-display-region 412 in a direction from the bottom edge 10b to the top edge 10a, $LDA1$ and $LDA2$ satisfy: $2° \leq LDA1\text{-}LDA2 \leq 4.5°$, or $2.5° \leq LDA1\text{-}LDA2 \leq 3.5°$, and $VID1$ and $VID2$

satisfy: $2 \leq VID1/VID2 \leq 50$, or $2.5 \leq VID1/VID2 \leq 10$.

In this implementation, when driving the vehicle, the observer eye usually needs to switch between the first projection-display-region 411 and the second projection-display-region 412. If the difference between the first look-down-angle $LDA1$ between the horizontal plane and the connection line of the first projection image 4111 and the observer eye E10 and the second look-down-angle $LDA2$ between the horizontal plane and the connection line of the second projection image 4121 and the observer eye E10 is too large, the angle of rotation required for the observer eye to switch between the first projection image 4111 and the second projection image 4121 is too large. As a result, the observer eye is tired after the observer switches between the first projection image 4111 and the second projection image 4121 many times, resulting in affecting driving. When the midpoint of the first projection image 4111 and the midpoint of the second projection image 4121 both are lower than the observer eye, the first look-down-angle $LDA1$ and the second look-down-angle $LDA2$ both are negative values. If the difference between the first look-down-angle $LDA1$ between the horizontal plane and the connection line of the first projection image 4111 and the observer eye E10 and the second look-down-angle $LDA2$ between the horizontal plane and the connection line of the second projection image 4121 and the observer eye E10 is too small, the first projection image 4111 and the second projection image 4121 have excessive overlaps, resulting in interfering with the display of information contained in the first projection image 4111 and the second projection image 4121, and further affecting driving of the observer. Therefore, the difference between the first look-down-angle $LDA1$ and the second look-down-angle $LDA2$ shall not be too large, in particular, $2° \leq LDA1-LDA2 \leq 4.5°$, such as, 2°, 2.5°, 2.8°, 3°, 3.2°, 3.5°, 3.8°, 4.0°, 4.5°, etc. Preferably, $2.5° \leq LDA1-LDA2 \leq 3.5°$, specifically, 2.5°, 2.6°, 2.7°, 2.8°, 2.9°, 3°, 3.1°, 3.2°, 3.3°, 3.4°, 3.5°, etc.

In this implementation, a ratio of the first virtual-image-distance $VID1$ between the first projection image 4111 and the observer eye E10 to the second virtual-image-distance $VID2$ between the second projection image 4121 and the observer eye E10 needs to be maintained in a certain range. If the ratio of the first virtual-image-distance $VID1$ to the second virtual-image-distance $VID2$ is too small, the design difficulty is increased, and the secondary image of the first projection image 4111 and the secondary image of the second projection image 4121 may be more difficult to be simultaneously eliminated. If the ratio of the first virtual-image-distance $VID1$ to the second virtual-image-distance $VID2$ is too large, the production difficulty of the intermediate adhesive layer and the laminated glass is increased. Therefore, the difference between the first virtual-image-distance $VID1$ and the second virtual-image-distance $VID2$ needs to be maintained in a certain range. Specifically, the first virtual-image-distance $VID1$ and the second virtual-image-distance $VID2$ satisfy: $2 \leq VID1/VID2 \leq 50$, preferably, $2.5 \leq VID1/VID2 \leq 10$.

Referring to FIG. 16 again, in this implementation, $-6° \leq LDA1 \leq 0°$, $-8° \leq LDA2 \leq -3°$.

In this implementation, the magnitude of the angle between the horizontal plane and the connection line of the virtual image projected onto the laminated glass 10 and the observer eye E10 may affect the position of the virtual image formed on the laminated glass 10 in front of the vehicle by projecting. Specifically, when the first look-down-angle $LDA1$ is larger, the virtual image of the first projection image 4111 is closer to the upper side of the vehicle, and the first virtual-image-distance $VID1$ is larger. Therefore, if the first look-down-angle $LDA1$ is too small, the first projection image 4111 may partially overlap the vehicle body in front of the laminated glass 10, so that the first projection image 4111 may be embedded in the vehicle, thereby affecting observation of the observer about the first projection image 4111. If the first look-down-angle $LDA1$ is too large, the first projection image 4111 may be displayed in the sky, so that it is difficult for the first projection image 4111 to be displayed interactively with entity information outside the vehicle, thereby reducing the information transmission quality of the first projection image 4111. Therefore, the first look-down-angle $LDA1$ needs to be maintained at a suitable angle. Specifically, the first look-down-angle $LDA1$ may satisfy: $-6° \leq LDA1 \leq 0°$.

In this implementation, if the second look-down-angle $LDA2$ is too small, the second projection image 4121 may partially overlap the vehicle body in front of the laminated glass 10, so that the second projection image 4121 may be embedded in the vehicle, thereby affecting observation of the observer about the second projection image 4121. If the second look-down-angle $LDA2$ is too large, the second projection image 4121 and the first projection image 4111 overlap too much, so that it is difficult for the first projection image 4111 to be displayed interactively with entity information outside the vehicle, thereby affecting the information transmission quality of the second projection image 4121. Therefore, the second look-down-angle $LDA2$ needs to be maintained at a suitable angle. Specifically, the second look-down-angle $LDA2$ may satisfy: $-8° \leq LDA1 \leq -3°$.

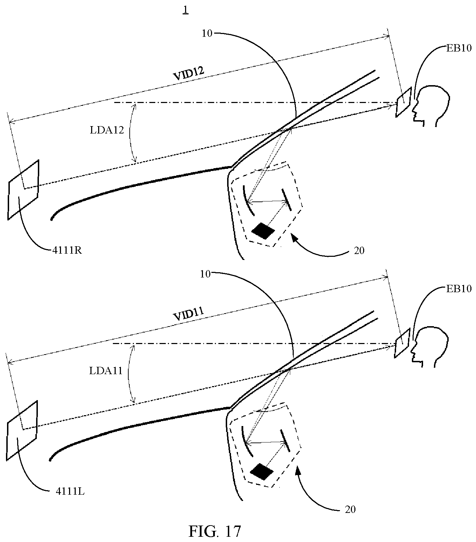

Reference can be made to FIG. 12 and FIG. 17, where FIG. 17 is a schematic view of projection imaging according to another implementation of the head-up display system provided in the implementation in FIG. 12. In this implementation, the multiple projection display regions 410 include at least two first projection display regions 411. A first left-projection-image 4111L and a first right-projection-image 4111R are respectively formed in two first projection-display-regions 411 disposed adjacent to each other in the horizontal direction. The first left-projection-image 4111L has a first left-look-down-angle $LDA11$ and a first left-virtual-image-distance $VID11$. The first right-projection-image 4111R has a first right-look-down-angle $LDA12$ and a first right-virtual-image-distance *VID12*. *LAD11* and *LDA12* may satisfy: $0° \leq |LDA11-LDA12| \leq 1°$. *VID11* and *VID12* may satisfy: $0.5 \leq VID11/VID12 \leq 2$, or $0.8 \leq VID11/VID12 \leq 1.2$.

In this implementation, when there are two first projection-display-regions 411 disposed adjacent to each other in the horizontal direction, the observer eye usually needs to switch between the two first projection-display-regions 411 disposed adjacent to each other during driving of the vehicle. If the difference between the first left-look-down-angle *LDA11* between the horizontal plane and the connection line of the first left-projection-image 4111L and the observer eye E10 and the first right-look-down-angle *LDA12* between the horizontal plane and the connection line of the first right-projection-image 4111R and the observer eye E10 is too large, the angle of rotation required for the observer eye to switch between the first left-projection-image 4111L and the first right-projection-image 4111R is too large. As a result, the observer eye is tired after the observer switches between the first left-projection-image 4111L and the first right-projection-image 4111R many times, resulting in affecting driving. If the difference between the first left-look-down-angle *LDA11* between the horizontal plane and the connection line of the first left-projection-image 4111L and the observer eye E10 and the first right-look-down-angle *LDA12* between the horizontal plane and the connection line of the first right-projection-image 4111R and the observer eye E10 is too small, the first left-projection-image 4111L and the first right-projection-image 4111R have excessive overlaps, resulting in interfering with the display of information contained in the first left-projection-image 4111L and the first right-projection-image 4111R, and further affecting driving of the observer. Therefore, the difference between the first left-look-down-angle *LDA11* and the first right-look-down-angle *LDA12* may not be too large, in particular, $0° \leq |LDA11-LDA12| \leq 1°$. It may be noted that the first end refers to one end of the laminated glass 10 close to the seat of the driver in the vehicle.

In this implementation, the difference between the first left-virtual-image-distance *VID11* between the first left-projection-image 4111L and the observer eye E10 and the first right-virtual-image-distance *VID12* between the first right-projection-image 4111R and the observer eye E10 needs to be maintained in a certain range. If the difference between the first left-virtual-image-distance *VID11* and the first right-virtual-image-distance *VID12* is too large, the observer eye E10 may feel abrupt when switching between the first left-projection-image 4111L and the first right-projection-image 4111R, which is prone to eye strain. In addition, if the difference between the first left-virtual-image-distance *VID11* and the first right-virtual-image-distance *VID12* is too large, the wedge-angle difference between the two first projection-display-regions 411 disposed adjacent to each other in the horizontal direction of the laminated glass 10 may be too large, and the design and manufacturing difficulty of the laminated glass 10 is increased. Therefore, the difference between the first left-virtual-image-distance *VID11* and the first right-virtual-image-distance *VID12* needs to be maintained in a certain range. Specifically, the first left-virtual-image-distance *VID11* and the first right-virtual-image-distance *VID12* satisfy: $0.5 \leq VID11/VID12 \leq 2$, preferably, $0.8 \leq VID11/VID12 \leq 1.2$.

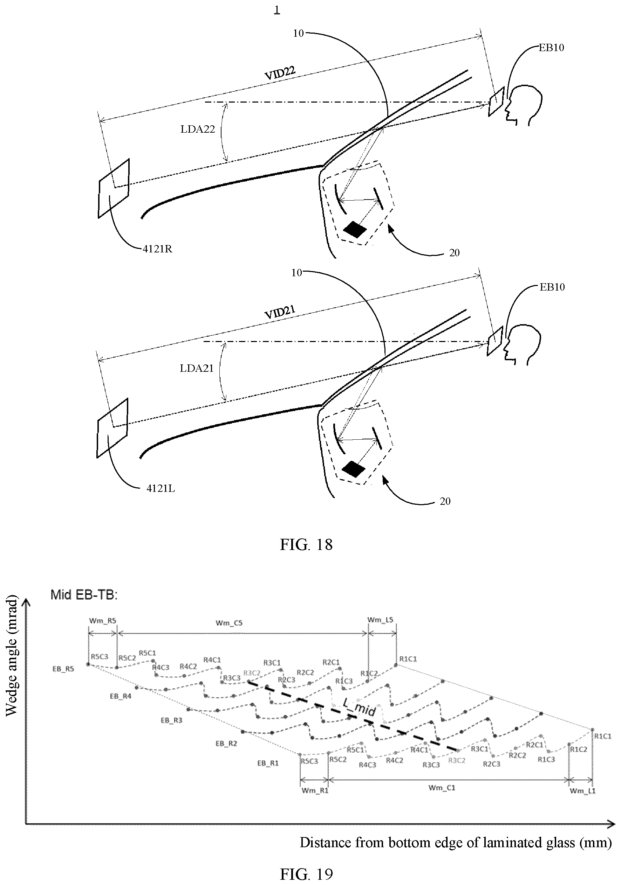

Reference can be made to FIG. 12 and FIG. 18, where FIG. 18 is a schematic view of projection imaging according to yet another implementation of the head-up display system provided in the implementation in FIG. 12. In this implementation, the multiple projection display regions 410 further include at least two second projection-display-regions 412. A second left-projection-image 4121L and a second right-projection-image 4121R are respectively formed in two second projection-display-regions 412 disposed adjacent to each other in the horizontal direction. The second left-projection-image 4121L has a second left-look-down-angle *LDA21* and a second left-virtual-image-distance *VID21*. The second right-projection-image 4121R has a second right-look-down-angle *LDA22* and a second right-virtual-image-distance *VID22*. *LDA21* and *LDA22* may satisfy: $0° \leq LDA21-LDA22 \leq 1°$, and the relationship between *VID21* and *VID22* is $0.5 \leq VID21/VID22 \leq 2$, or $0.8 \leq VID21/VID22 \leq 1.2$.

In this implementation, when there are the two second projection-display-regions 412 disposed adjacent to each other in the horizontal direction, the observer eye usually needs to switch between the two second projection-display-regions 412 disposed adjacent to each other during driving of the vehicle. If the difference between the second left-look-down-angle *LDA21* between the horizontal plane and the connection line of the second left-projection-image 4121L and the observer eye E10 and the second right-look-down-angle *LDA22* between the horizontal plane and the connection line of the second right-projection-image 4121R and the observer eye E10 is too large, the angle of rotation required for the observer eye to switch between the second left-projection-image 4121L and the second right-projection-image 4121R is too large. As a result, the observer eye is tired after the observer switches between the second left-projection-image 4121L and the second right-projection-image 4121R many times, resulting in affecting driving. If the difference between the second left-look-down-angle *LDA21* and the second right-look-down-angle *LDA22* is too small, the second left-projection-image 4121L and the second right-projection-image 4121R have excessive overlap portions, resulting in interfering with the display of information contained in the second left-projection-image 4121L and the second right-projection-image 4121R, and further affecting the driving of the observer. Therefore, the difference between the second left-look-down-angle *LDA21* and the second right-look-down-angle *LDA22* may not be too large, in particular, $0° \leq |LDA21-LDA22| \leq 1°$. It may be noted that the first end refers to one end of the laminated glass 10 close to the seat of the driver in the vehicle.

In this implementation, the difference between the second left-virtual-image-distance *VID21* between the second left-projection-image 4121L and the observer eye E10 and the second right-virtual-image-distance *VID22* between the second right-projection-image 4121R and the observer eye E10 needs to be maintained in a certain range. If the difference between the second left-virtual-image-distance *VID21* and the second right-virtual-image-distance *VID22* is too large, the observer eye E10 may feel abrupt when switching between the second left-projection-image 4121L and the second right-projection-image 4121R, which is prone to eye strain. In addition, if the difference between the second left-virtual-image-distance *VID21* and the second right-virtual-image-distance *VID22* is too large, the wedge-angle difference between the two second projection-display-regions 412 disposed adjacent to each other in the horizontal direction of the laminated glass 10 may be too large, and the design and manufacturing difficulty of the laminated glass 10 is increased. Therefore, the difference between the second left-virtual-image-distance *VID21* and the second right-virtual-image-distance *VID22* needs to be maintained in a certain range. Specifically, the second left-virtual-image-distance *VID21* and the second right-virtual-image-distance *VID22* satisfy: $0.5 \leq VID21/VID22 \leq 2$, preferably, $0.8 \leq VID21/VID22 \leq 1.2$.

Referring to FIG. 1 again, in this implementation, the multiple projection display regions 410 are disposed separately or partially overlapped.

In an implementation, the multiple projection display regions 410 can be separately disposed to ensure that the information transmission between the multiple projection display regions 410 is more independent and clearer. In another implementation, adjacent projection display regions 410 of the multiple projection display regions 410 may partially overlap each other to increase the number of projection display regions 410. In addition, the projection display regions 410 disposed adjacent to each other partially overlap each other, so that the linkage of information transmission between the projection display regions 410 disposed adjacent to each other can be increased, thereby increasing the diversity of the head-up display system 1.

In an implementation, the wedge angle in the first projection-display-region 411 ranges from 0 mrad to 0.5 mrad. The wedge angle in the second projection-display-region 412 ranges from 0.1 mrad to 0.8 mrad. Specifically, the wedge angle in the first projection-display-region 411 may be 0.1 mrad, 0.18 mrad, 0.23 mrad, 0.47 mrad, etc. The wedge angle of the second projection-display-region 412 may be 0.16 mrad, 0.25 mrad, 0.38 mrad, 0.44 mrad, 0.68 mrad, etc., which is not limited in the present disclosure.

Referring to FIG. 6 again, in this implementation, the head-up display system 1 further defines a virtual eyebox plane EB10 located inside the vehicle and at least one virtual image plane (e.g., a first virtual-image-plane TB20) located outside the vehicle. Each first projection-display-region 411 corresponds to one first virtual-image-plane TB20. A ratio of height to width of the first virtual-image-plane TB20 is less than or equal to 0.5.

In this implementation, in a combination of middle eyebox sub-plane EB11 of 5*3-middle first virtual-image sub-plane TB21 of 5*3, a wedge-angle scatter data set composed of data points of theoretical wedge angles required for eliminating secondary images in the direction from the bottom edge 10b of the laminated glass 10 to the top edge 10a of the laminated glass 10 is described as an example. Points on the middle eyebox sub-plane EB11 are labeled. For example, a perpendicular bisector of the middle eyebox sub-plane EB11 may be represented as a connection line of point EB_R1C2 and point EB_R5C2, where EB (Eye Box) represents the eyebox sub-plane EB11, R represents Row, and C represents Column. Similarly, points on the middle first virtual-image sub-plane TB21 are labeled. The height of the middle first virtual-image sub-plane TB21 can be expressed as the distance between point TB_R1C2 and point TB_R5C2, where TB (Target Image Box) represents the first virtual-image sub-plane TB21.

Reference can be made to FIG. 19, which is a schematic view of a wedge-angle scatter data set provided in an implementation of the present disclosure. A connection line of a top point on the perpendicular bisector of the middle eyebox sub-plane EB11 and point TB_R1C2 is a first connection line. There is a first intersection of the first connection line and the laminated glass. A connection line of a top point on the perpendicular bisector of the middle eyebox sub-plane EB11 and point TB_R5C2 is a second connection line. There is a second intersection of the second connection line and the laminated glass have. The length between the first intersection and the second intersection in the direction from the bottom edge 10b to the top edge 10a is Wm_C1. In FIG. 19, point TB_R1C2 has R1C2 in a wedge-angle scatter data set corresponding to the top point on the perpendicular bisector of the middle eyebox sub-plane EB11. Point TB_R5C2 has R5C2 in a wedge-angle scatter data set corresponding to the top point on the perpendicular bisector of the middle eyebox sub-plane EB11. The value of Wm_C1 is equal to the difference between X value of R1C2 and X value of R5C2.

When viewed from a position of the top point on the perpendicular bisector of the middle eyebox sub-plane EB11, the corresponding length from point TB_R1C2 to point TB_R5C2 in the X-axis direction is Wm_C1. When viewed from a position of a bottom point on the perpendicular bisector of the middle eyebox sub-plane EB11, the corresponding length from point TB_R1C2 to point TB_R5C2 in the X-axis direction is Wm_C5. By analogy, when viewed from positions of the other three points between the top point and the bottom point, the corresponding lengths from point TB_R1C2 to point TB_R5C2 in the X-axis direction are sequentially Wm_C2, Wm_C3, and Wm_C4. Thus, the length of the wedge-angle scatter-data-set block corresponding to the height of the middle first virtual-image sub-surface TB21 is Wm_C1 to Wm_C5, which is simplified as Wm_C below. Similarly, the length of the wedge-angle scatter-data-set block corresponding to the height of the upper first virtual-image sub-plane TB21 is Wt_C, and the length of the wedge-angle scatter-data-set block corresponding to the height of the lower first virtual-image sub-plane TB21 is Ws_C. In this implementation, X axis is defined as a direction from the bottom edge 10b to the top edge 10a of the laminated glass.

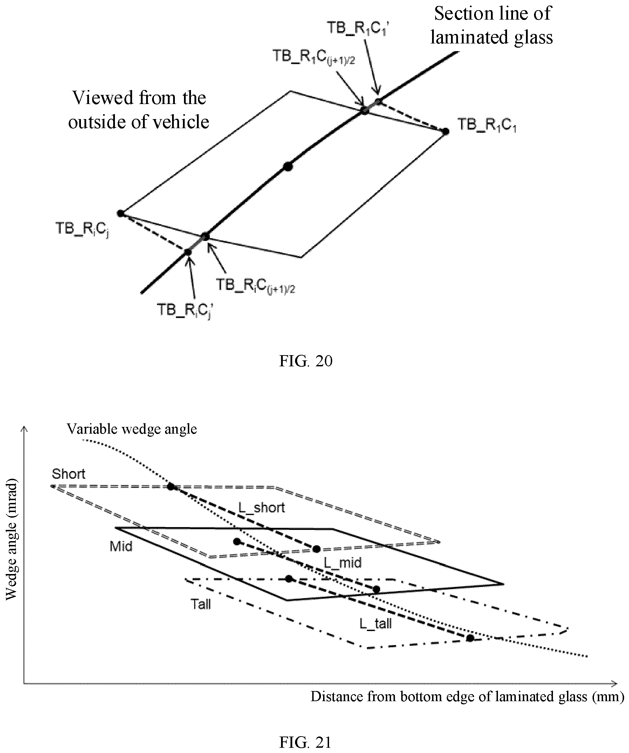

In this implementation, reference can be made to FIG. 20, which is a schematic view of a section line of laminated glass provided in an implementation of the present disclosure. It may be noted that FIG. 20 is a schematic view of a section line of the laminated glass 10 viewed from the outside of the vehicle to the inside of the vehicle, where i represents the number of labeled rows of points corresponding to the first virtual-image sub-plane TB21, and j represents the number of labeled columns of points corresponding to the first virtual-image sub-plane TB21. As illustrated in FIG. 20, the projection of the width of the first virtual-image sub-plane TB21 on the laminated glass 10 has a vertical length. In other words, the width of the first virtual-image sub-plane TB21 corresponds to the length of the wedge-angle scatter-data-set block. The connection line of the top point on the perpendicular bisector of the middle eyebox sub-plane EB11 and point TB_R5C2 is the second connection line. There is the second intersection of the second connection line and the laminated glass. A connection line of the top point on the perpendicular bisector of the middle eyebox sub-plane EB11 and point TB_R5C3 in the lower right corner of the middle first virtual-image sub-plane TB21 (viewed from the inside of the vehicle to the outside of the vehicle) is a third connection line. There is a third intersection of the third connection line and the laminated glass. The length between the second intersection and the third intersection in the direction from the bottom edge 10b to the top edge 10a is Wm_R1. In FIG. 19, point TB_R5C2 has R5C2 in the wedge-angle scatter data set corresponding to the top point on the perpendicular bisector of the middle eyebox sub-plane EB11. Point TB_R5C3 has R5C3 in the wedge-angle scatter data set corresponding to the top point on the perpendicular bisector of the middle eyebox sub-plane EB11. The value of Wm_R1 is equal to the difference between X value of R5C2 and X value of R5C3. The connection line of the top point on the perpendicular bisector of the middle eyebox sub-plane EB11 and point TB_R1C2 is the first connection line. There is the first intersection of the first connection line and the laminated glass. A connection line of the top point on the perpendicular bisector of the middle eyebox sub-plane EB11 and point TB_R1C1 in the upper left corner of the middle first virtual-image sub-plane TB21 (viewed from the inside of the vehicle to the outside of the vehicle) is a fourth connection line. There is a fourth intersection of the fourth connection line and the laminated glass. The length between the first intersection and the fourth intersection in the direction from the bottom edge 10b to the top edge 10a is Wm_L1. In FIG. 19, point TB_R1C2 has R1C2 in the wedge-angle scatter data set corresponding to the top point on the perpendicular bisector of the middle eyebox sub-plane EB11. Point TB_R1C1 has R1C1 in the wedge-angle scatter data set corresponding to the top point on the perpendicular bisector of the middle eyebox sub-plane EB11. The value of Wm_L1 is equal to the difference between X value of R1C1 and X value of R1C2. By analogy, the widths of the middle first virtual-image sub-plane TB21 correspond to Wm_R1 to Wm_R5 and Wm_L1 to Wm_L5, which are respectively simplified as Wm_R and Wm_L below. Similarly, the projection of the widths of the lower first virtual-image sub-plane TB21 on the cross-sectional line of the laminated glass 10 has lengths of Ws_R and Ws_L. The projection of the widths of the upper first virtual-image sub-plane TB21 on the cross-sectional line of the laminated glass 10 has lengths of Wt_R and Wt_L. Thus, in the extending direction of the laminated glass 10, the projection length of the upper first virtual-image sub-plane TB21, the projection length of the middle first virtual-image sub-plane TB21, and the projection length of the lower first virtual-image sub-planes TB21 respectively satisfy:

$$Wt = Wt\_C + Wt\_R + Wt\_L$$

$$Wm = Wm\_C + Wm\_R + Wm\_L$$

$$Ws = Ws\_C + Ws\_R + Ws\_L$$

It can be seen from the above that both the height and the width of the first virtual-image sub-plane TB21 can affect the size of the wedge-angle scatter-data-set block. Therefore, when the height and the width of the first virtual-image-plane TB20 is reduced, the size of the wedge-angle scatter-data-set block can be reduced to form a long and narrow wedge-angle scatter-data-set block, thereby reducing the discrete state of the wedge-angle scatter data set and obtaining a better fitting effect of the variable wedge curve. Since the proportion of Wm_C is the largest among Wm_C, Wm_L, and Wm_R. In other words, among two factors of the height and width of the first virtual-image sub-plane TB21 affecting the long and narrow effect of the scatter data distribution plot, the change of the height of the first virtual-image sub-plane TB21 can more easily achieve the long and narrow effect of the scatter distribution plot. Therefore, the ratio of height to width may be set to be less than or equal to 0.5.

It may be noted that the height and width of the first virtual-image sub-plane TB21 are generally measured by field of view (FOV), such as 7°*5°, 9°*4°, and 20°*5°. There is a certain conversion formula between the degree of FOV and the specification value of the first virtual-image sub-plane TB21, which will not be elaborated in the present disclosure. According to the FOV used, a preset height threshold and a preset width threshold of the first virtual-image sub-plane TB21 can be determined, so that the height of the first virtual-image sub-plane TB21 is smaller than the preset height threshold of the first virtual-image sub-plane TB21 and the width of the first virtual-image sub-plane TB21 is smaller than the preset width threshold of the first virtual-image sub-plane TB21, thereby achieving the purpose of reducing the discrete state of the wedge-angle scatter data set.

In this implementation, the ratio of height to the width of the first virtual-image-plane TB20 is less than or equal to 0.5, that is, the ratio of height to the width of the first virtual-image sub-plane TB21 is less than or equal to 0.5. Specifically, in terms of the proportional relationship between the height of the first virtual-image-plane TB20 and the width of the first virtual-image-plane TB20, the less the ratio of height to width of the first virtual-image-plane TB20, the better. Meanwhile, considering that the application scenario of the present disclosure is the laminated glass 10 on the vehicle, and the layout of the display content in the FOV, a display screen in the wide and narrow form is more appropriate. Therefore, the ratio of height to width of the first virtual-image-plane TB20 may be less than or equal to 0.5.

It can be understood that in this implementation, both the height of the first virtual-image-plane TB20 and the width of the first virtual-image-plane TB20 have influences on the wedge cross-sectional shape at different positions in the first projection-display-region 411, and the height of the first virtual-image-plane TB20 has a greater influence on the wedge cross-sectional shape at different positions in the first projection-display-region 411. Since the ratio of height to width of the first virtual-image-plane TB20 is less than or equal to 0.5, the height of the first virtual-image-plane TB20 is greatly reduced, thereby reducing the discrete state of the wedge-angle scatter data set.

It can be understood that for the region outside the first projection-display-region 411 of the laminated glass 10, in order to smooth the transition between the first projection-display-region 411 of the laminated glass 10 and other functional regions or boundary portions connected to the first projection-display region 411, as illustrated in FIG. 9, a certain length may be extended from both ends of the variable wedge curve to both sides of the variable wedge curve to be a transition section of the first variation curve L1. It can be divided into an in-section extension mode and an out-of-section extension mode, that is, an extension starting point is set within the range of the wedge-angle scatter data set, or the extension starting point is set outside the range of the wedge-angle scatter data set.

In general, it is better to use the in-section extension mode, as illustrated in FIG. 9, so that the maximum wedge angle of the wedge-angle scatter data set can be smaller, and the ROC of the wedge angle from the bottom edge 10b of the laminated glass 10 to the position of the maximum wedge angle can be gentler. Therefore, the laminated glass 10 can be manufactured more easily, and the overall thickness of the laminated glass 10 can be reduced.

Further, for the fitting of the entire section of the variable wedge curve from the bottom edge 10b of the laminated glass 10 to the top edge 10a of the laminated glass 10, the complete variable wedge curve may be fitted by appropriate fine adjustment in the tolerance range based on variable sections of the wedge curve. In other words, the final complete variable wedge curve may not completely overlap the curve fitted by the best variable wedge angle of each section. It can be understood that in this implementation, the entire laminated glass 10 has a variable wedge-shaped cross-sectional shape, to relieve the secondary image condition of the primary image and the secondary image when the human eye or visual system is located outside the eyebox plane EB10.

It may be noted that under the predetermined arrangement specification of the projection assembly 20, according to the law of light reflection, after being reflected on the projector mirror-surface and the inner surface of the laminated glass 10, a single beam of light emitted from the first projection light-source 211 enters the eyebox plane EB10, and this single beam of light is unique. Similarly, after being reflected on the projector mirror-surface and the reflection surface in the dielectric of the laminated glass 10, and then being refracted by the inner surface of the laminated glass 10, the single beam of light emitted from the first projection light-source 211 enters the eyebox plane EB10, and this single beam of light is also unique. In addition, there is an angle between the two beams of light, which is the secondary image angle or secondary image. It can be understood that the secondary image may be divided into a horizontal secondary image and a vertical secondary image. A vertical component of the secondary image relative to the primary image in the up and down direction is celled the vertical secondary image, and a horizontal component of the secondary image relative to the primary image in the left and right direction is called the horizontal secondary image.

The variable wedge angle described in the present disclosure includes a vertical variable-wedge-angle, a horizontal variable-wedge-angle, and a variable wedge angle of bidirectional compound. For convenience of understanding, the present disclosure only explains the vertical secondary image and the corresponding wedge angle, and the horizontal secondary image and the corresponding wedge angle may also be designed with reference to the vertical secondary image and the corresponding wedge angle, which will not be repeated here.

In an implementation, the ratio of height to width of the first virtual-image-plane TB20 is 0.05 to 0.4.

Specifically, the ratio of height to width of the first virtual-image-plane TB20 may be 0.1, 0.13, 0.17, 0.28, 0.37, etc., which is not limited in the present disclosure.

In an implementation, an angle between the first virtual-image-plane TB20 and the eyebox plane EB10 is ≤ 10°.

Specifically, the angle between the first virtual-image-plane TB20 and the eyebox plane EB10 refers to an angle defined by a plane on which the first virtual-image-plane TB20 is located intersecting with a plane on which the eyebox plane EB10 is located, and represents an inclination degree of the projection image formed by the first projection light-source 211 on the laminated glass 10. Optionally, the angle between the first virtual-image-plane TB20 and the eyebox plane EB10 is ≤ 5°. Further, the angle between the first virtual-image-plane TB20 and the eyebox plane EB10 is 0°. Therefore, the eyebox plane EB10 can view the projection image on the laminated glass 10 at an optimal angle.

In an implementation, referring to FIG. 8 again, the eyebox plane EB10 includes multiple eyebox sub-planes EB11 sequentially from high to low. The first virtual-image-plane TB20 includes multiple first virtual-image sub-planes TB21 sequentially from low to high. Each first virtual-image sub-plane TB21 corresponds to one eyebox sub-plane EB11. A connection line of a midpoint of the eyebox sub-plane EB11 and a midpoint of a corresponding first virtual-image sub-plane TB21 is a primary optical axis. An intersection of primary optical axes corresponding to any two adjacent eyebox sub-planes EB11 is located outside the vehicle.

Specifically, as illustrated in FIG. 8, a primary optical axis of the upper eyebox sub-plane EB11 and the lower first virtual-image sub-plane TB21 intersects with a primary optical axis of the middle eyebox sub-plane EB11 and the middle first virtual-image sub-plane TB21 to define an intersection *a*. A primary optical axis of the lower eyebox sub-plane EB11 and the upper first virtual-image sub-plane TB21 intersects with the primary optical axis of the middle eyebox sub-plane EB11 and the middle first virtual-image sub-plane TB21 to define an intersection b. In other words, any two adjacent eyebox sub-planes EB11 or any two adjacent first virtual-image sub-planes TB21 at least partially overlap each other. Therefore, for the distribution in the abscissa direction, different wedge-angle scatter-data-set blocks have relatively large regions overlapping with each other, and are staggered from each other by a small distance.

It can be understood that when the intersection *a* and the intersection *b* are located outside the vehicle and farther away from the laminated glass 10, the overlapping portion of the wedge-angle scatter data sets corresponding to the adjacent first virtual-image sub-planes TB21 becomes smaller and smaller. Each wedge-angle scatter-data-set block presents an inclined rhombus-like shape with left high and right low, thereby forming a longer and narrower wedge-angle scatter-data-set block.

It can be understood that each parameter of the projection assembly 20 may directly affect the variation of light, thereby affecting the wedge angle required to eliminate the secondary image at the corresponding position of the laminated glass 10. In order to reduce the manufacturing difficulty of the laminated glass 10 and to ensure the imaging quality of the first projection light-source 211, the maximum local range of the wedge-angle scatter data set at the corresponding position of the laminated glass 10 is reduced by changing various parameters in the projection assembly 20.

Specifically, in the wedge-angle scatter data set, the difference between the maximum theoretical wedge angle and the minimum theoretical wedge angle at any position of the first projection-display-region 411 from the lower edge of the laminated glass 10 is called the local range. The maximum local range refers to the maximum among the local ranges. When the maximum local range of the wedge-angle scatter data set is reduced, the range of the wedge-angle scatter data set is "longer and narrower" in FIG. 9. In other words, the dispersion degree of wedge scatter values at different positions of the laminated glass 10 is reduced, and the manufacturing difficulty of the laminated glass 10 is also reduced to a certain extent.

It can be understood that in this implementation, by changing each parameter of the projection assembly 20, the maximum local range of the wedge-angle scatter data set at the corresponding position of the laminated glass 10 is reduced. In other words, the degree of difference of wedge angles at different positions of the laminated glass 10 is reduced, the manufacturing difficulty of the laminated glass 10 is reduced, and the effect of eliminating secondary images is good.

It may be noted that the variable wedge angle and other features related to the first projection-display-region 411 are described above. It can be understood that the variable wedge angle and other features related to the second projection-display-region 412 are similar to the variable wedge angle and other features related to the first projection-display-region 411, which will not be repeated in the present disclosure.

In an implementation, a distance between the intersection of the primary optical axes corresponding to any two adjacent eyebox sub-planes EB11 and the first surface 110 of the laminated glass 10 ranges from 10 mm to 1000 mm.

Specifically, the distance between the intersection of the primary optical axes corresponding to any two adjacent eyebox sub-planes EB11 and the first surface 110 of the laminated glass 10 may also range from 40 mm to 800 mm. Further, the distance between the intersection of the primary optical axes corresponding to any two adjacent eyebox sub-planes EB11 and the first surface 110 of the laminated glass 10 may also range from 100 mm to 600 mm, which is not limited in the present disclosure.

In an implementation, a distance between an intersection of a primary optical axis and a surface of the laminated glass 10 and a midpoint of a corresponding eyebox sub-plane EB11 ranges from 0.4 m to 1.2 m.

Specifically, the distance between the intersection of the primary optical axis and the surface of the laminated glass 10 and the midpoint of the corresponding eyebox sub-plane EB11 may affect the design of the head-up display system 1. If the distance between the intersection of the primary optical axis and the surface of the laminated glass 10 and the midpoint of the corresponding eyebox sub-plane EB11 is too large or too small, the application effect of the head-up display system 1 will be deteriorated. In order to more reasonably apply the head-up display system 1 to the vehicle, in this implementation, the distance between the intersection of the primary optical axis and the surface of the laminated glass 10 and the midpoint of the corresponding eyebox sub-plane EB11 ranges from 0.4 m to 1.2 m.

In an implementation, the height of the eyebox sub-plane EB11 ranges from 40 mm to 60 mm.

Specifically, the eyebox sub-plane EB11 is used for simulating the human eye or visual system. In combination with SAE J941, SAE J1757-2, and other standards, in consideration of the distribution range of human eyes of the applicable user and the manufacturing/assembly tolerance of the head-up display system, the height of the eyebox sub-plane EB11 may be appropriately adjusted to 40 mm to 60 mm in order to more reasonably apply the head-up display system to the vehicle.

In an implementation, referring to FIG. 6 again, a distance between the midpoint of the eyebox plane EB10 and the midpoint of the first virtual-image-plane TB20 is a virtual image distance. When the virtual image distance ranges from 2 m to 6 m, the wedge angle in the first projection-display-region 411 ranges from 0.3 mrad to 0.7 mrad.

In this implementation, referring to FIG. 19 again, when the midpoint of the middle first virtual-image sub-plane TB21, that is, point TB_R3C2, is viewed from the perpendicular bisector of the middle eyebox sub-plane EB11, it can be seen that the length of the wedge-angle scatter-data-set block corresponding to the height of the middle eyebox sub-plane EB11 is L_mid. It can be understood that the inclination degree of L_mid also reflects the inclination degree of the wedge-angle scatter-data-set block. According to the following calculation formula, the length of the projection of L_mid on X axis $\approx$ (L_VID-L_G)/(L_VID)*(H_EB)/sin$\alpha$, where L_VID represents the length of the virtual image distance, L_G represents the length between the intersection of the primary optical axis and the laminated glass 10 and the midpoint of the middle eyebox sub-plane EB11, H_EB represents the height of the middle eyebox sub-plane EB11, and $\alpha$ represents the angle between the primary optical axis of the middle eyebox sub-plane EB11 and the middle first virtual-image sub-plane TB21 and the laminated glass 10 in a primary-optical-axis plane.

When the height and position of the middle eyebox sub-plane EB11 are constant, that is, when H_EB and L_G are constant, and $\alpha$ is constant, the longer virtual image distance leads to longer L_mid. Specifically, for example, if L_VID ranges from 2.0 m to 15 m, L_G ranges from 0.4 m-1.2 m, and H_EB ranges from 40 mm to 60 mm, the length of projection of L_mid on X axis generally ranges from 16/sin$\alpha$ to 58/sin$\alpha$. When $\alpha$ = 30 deg, the length of projection of L_mid on X axis ranges from 32 mm to 108 mm.

Similarly, reference can be made to FIG. 21, which is a schematic view of a wedge-angle scatter data set provided in another implementation of the present disclosure. The length of L_tall corresponding to the upper eyebox sub-plane EB11-lower first virtual-image sub-plane TB21, and the length of L_short corresponding to the lower eyebox sub-plane EB11-upper first virtual-image sub-plane TB21, can be calculated according to the above method. Similarly, when the height and position of the eyebox sub-plane EB11 are constant, that is, when H_EB and L_G are constant, and $\alpha$ is constant, the longer virtual image distance leads to longer L_tall and L_short.

It can be understood that in the case that other conditions are the same, when the length of L_tall/L_mid/L_short is longer, the corresponding wedge-angle scatter-data-set block is longer and narrower, and is less inclined, which is more suitable for designing the head-up display system with the variable wedge angle.

In this implementation, the virtual image distance ranges from 2 m to 6 m. Optionally, the virtual image distance may also range from 2 m to 4.5 m, which is not limited in the present disclosure.

In an implementation, the distance between the midpoint of the eyebox plane EB10 and the midpoint of the first virtual-image-plane TB20 is a virtual image distance. When the virtual image distance ranges from 7 m to 100 m, the wedge angle of the first projection-display-region 411 ranges from 0.1 mrad to 0.3 mrad. Specifically, for the relationship between the virtual image distance and the wedge angle of the first projection-display-region 411, reference can be made to the description of the above implementation, which will not be repeated here.

In this implementation, the virtual image distance ranges from 7 m to 100 m. Optionally, the virtual image distance may also range from 7 m to 75 m, which is not limited in the present disclosure.

In the present disclosure, the vehicle-body coordinate, and the XY plane, XZ plane and XY plane of the vehicle-body coordinate are all formulated according to the Chinese national standard GB9656-2003.

In an implementation, a radius of curvature R of the projection display region 410 changes monotonically in a longitudinal direction and/or a transverse direction. The radius of curvature R has an ROC of -20% to +20%.

Specifically, the ROC of the radius of curvature R may be, but is not limited to -20%, -18%, -16%, -14%, -12%, -10%, -8%, -6%, -4%, -2%, 0%, 2%, 4%, 6%, 8%, 10%, 12%, 14%, 16%, 18%, 20%. When the radius of longitudinal curvature $R$, that is, the radius of curvature $R$ in the longitudinal direction, has a certain degree of ROC, the corresponding wedge angles that can avoid secondary images at different positions on the projection display region 410 will also fluctuate, which will easily lead to the larger discrete state of the wedge-angle scatter data set, resulting in a significant increase in the manufacturing difficulty and process cost of the laminated glass 10 in the present disclosure. The ROC of the radius of curvature R of the effective region of the projection light emitted by the projection light-source 201 = (maximum radius - minimum radius)/minimum radius $\times$ 100%. For the projection display region 410 in the present disclosure, through the preset wedge-angle parameter and change trend, the degree of difference of wedge angles at different positions in the projection display region 410 is reduced, and the ROC of the wedge angle presents a trend of non-linearly decreasing. Therefore, the laminated glass 10 in the present disclosure has low manufacturing difficulty, and ensures a good effect of eliminating the secondary image.

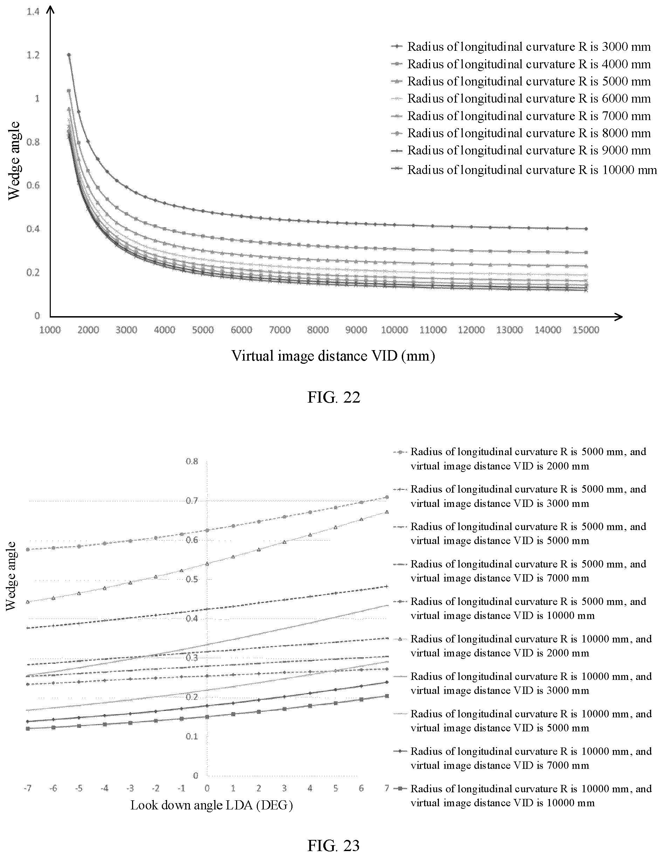

Referring can be made to FIG. 22, which is a schematic view of curves of wedge angles varying with virtual image distances under different longitudinal radii of curvature provided in an implementation of the present disclosure. An inclination angle of glass is 26.1 deg. Specifically, FIG. 22 is a schematic view illustrating an influence of parameters such as the projection optical path and the curvature of the glass surface on the secondary image by using a point of the eyebox plane EB10 and a point of the first virtual-image-plane TB20. In the projection optical path, the eyebox plane EB10 corresponds to the first virtual image TB20. When nominal thicknesses of glass, inclination angles of the glass, radii of transverse curvature, look down angles, look over angles, and field of view are constant, wedge angles that can avoid secondary images are simulated according to different radii of longitudinal curvature $R$ and different virtual image distances $VID$. As illustrated in FIG. 22, when the virtual image distance $VID$ of the laminated glass 10 is constant, the wedge angles where the images viewed from the multiple eyebox planes EB10 have no secondary image decrease as the radius of longitudinal curvature $A$ increases. By increasing the radius of longitudinal curvature $R$, the wedge angle for eliminating the secondary image can be reduced, and the discrete state of the wedge-angle scatter data set can be reduced.

The inclination angle of glass is a parameter of the inclination degree of the glass. When the glass is applied to the vehicle, the glass usually has a curved surface. An angle between the horizontal plane and a chord line of an intersection line of XZ plane in the vehicle-body coordinate and the glass surface is the inclination angle of glass.

It can be understood that for the relationship between the radius of transverse curvature $R$, that is, the radius of curvature $R$ in the transverse direction, and the wedge angle for eliminating the secondary image, reference can be made to the relationship between the radius of longitudinal curvature $R$ and the wedge angle for eliminating the secondary image, which will not be repeated in the present disclosure.

Referring to FIG. 22 again, in an implementation, the radius of longitudinal curvature $R$ is greater than or equal to 5000 mm. Optionally, in the present disclosure, the radius of longitudinal curvature $A$ may be, but is not limited to, 5000 mm, 5100 mm, 5200 mm, 5300 mm, 5400 mm, 5500 mm, 5600 mm, 5700 mm, 5800 mm, 5800 mm, 5900 mm, 6000 mm. In an implementation, the radius of transverse curvature A ranges from 1500 mm to 4000 mm. Optionally, in the present disclosure, the radius of transverse curvature R may be, but is not limited to, 1500 mm, 1800 mm, 2100 mm, 2400 mm, 2700 mm, 3000 mm, 3300 mm, 3600 mm, 3900 mm, 4000 mm. When the laminated glass 10 is used as a windshield of the vehicle, the laminated glass 10 has a radius of longitudinal curvature $A$ in a direction from the bottom edge 10b to the top edge 10a, and a radius of transverse curvature $A$ in a direction from one side of the glass to the other side of the glass. The value of the radius of curvature at a certain position of the laminated glass 10 has a certain influence on the imaging of the projection display region 410 at this position, thereby affecting the wedge angle that is set for eliminating the secondary image in the projection display region 410 at this position. In some implementations, on the first variation curve L1 of the laminated glass 10, when the radius of longitudinal curvature $R$ is constant and greater than and equal to 5000 mm, and/or when the radius of transverse curvature $R$ is constant and ranges from 1500 mm to 4000 mm, the influence of the radius of curvature $R$ on the wedge angle for eliminating the secondary image in the projection display region 410 is gradually reduced.

In an implementation, at the same virtual image distance $VID$, the corresponding ROC of the wedge angle is not obvious with the increase of the radius of longitudinal curvature $R$ of the glass surface, and the ROC is approximately constant when $R \geq 5000$ mm. At the same radius of longitudinal curvature $R$, the rate of increase of the corresponding wedge angle decreases with the increase of virtual image distance $VID$. When the virtual image distance $VID \geq 5000$ mm, the ROC of the wedge angle is greater than -0.2 mrad/1000 mm. When the virtual image distance $VID$ increases, the rate of increase of the wedge angle is gentler, thereby reducing the discrete state of the wedge-angle scatter data set. If the slope of the first variation curve L1 is too large, the production process will be difficult. Therefore, the gentle rate of increase is preferred. Optionally, the rate of increase of the wedge angle is greater than or equal to -0.5 mrad/1000 mm. Preferably, the rate of increase K of the wedge angle is greater than or equal to -0.2 mrad/1000 mm.

In an implementation, reference can be made to FIG. 23, which is a schematic view of wedge angles varying with first look-down-angles under different longitudinal radii of curvature and different virtual image distances provided in an implementation of the present disclosure. The inclination angle of glass is 26.1 deg. FIG. 23 illustrates the relationship between the wedge angle and the first look-down-angle *LDA1*. The first look-down-angle *LDA1* is an angle between XY plane of the vehicle-body coordinate and a connection line of a midpoint of each eyebox sub-plane EB11 and a midpoint of each corresponding first virtual-image sub-plane TB21 when viewed from the eyebox plane EB10, where the downward (-Z axis) is negative, and vice versa is positive.

In an implementation, when the radius of longitudinal curvature R and the virtual image distance *VID* of the laminated glass 10 are constant, the wedge angles where the images viewed from the multiple eyebox sub-planes EB10 have no secondary image increases as the first look-down-angle *LDA1* increases. Similarly, in the same eyebox plane EB10, the first look-down-angle *LDA1* of the first eyebox-sub-plane EB12, the first look-down-angle *LDA1* of the second eyebox-sub-plane EB13, and the first look-down-angle *LDA1* of the third eyebox-sub-plane EB14 tends to increase, and the wedge angle for the eliminating the secondary image also tends to increase. In other words, a wedge angle corresponding to an optical path of the first eyebox-sub-plane EB12 < a wedge angle corresponding to an optical path of a second eyebox-sub-plane EB13 < a wedge angle of an optical path of a third eyebox-sub-plane EB14. When the difference *ΔLDA1* of the first look-down-angle of the third eyebox-sub-plane EB14 and the first look-down-angle of the first eyebox-sub-plane EB12 satisfies: *ΔLDA1* = 6 deg (when *R* = 10000 mm, *VID* = 2000 mm), the difference of the wedge angle is about 0.1 mrad. Therefore, in the present disclosure, by limiting the first look-down-angle *LDA1* to be in range of -8° ≤ *LDA* ≤ 0°, the wedge angle is ensured to present a slow increasing trend, thereby reducing the discrete state of the wedge-angle scatter data set.

Similarly, for the range of the second look-down-angle *LDA2*, reference may also be made to the range of the first look-down-angle *LDA1*, which will not be repeated in the present disclosure.

In an implementation, the laminated glass 10 has a functional region for sensor-signal transmission. The functional region has a wedge-shaped cross-sectional shape in which a wedge angle is constant or linearly variable.

The sensor may be a camera, a light detection and ranging (LiDAR), etc. In the functional region for signal transmission of the sensor such as a camera, a LiDAR, etc., a wedge-shaped intermediate adhesive layer may also be used to optimize the transmission ghosting problem of the corresponding sensor. The wedge-shaped intermediate adhesive layer in the functional region has a constant wedge angle or a wedge angle with a constant slope, where the wedge angle is a constant value or a variation curve of a first-order simple function, so that the production control of the wedge angle can be easy.

In an implementation, a thermal insulation coating is disposed on the second surface 120 and/or the third surface 210. The thermal insulation coating includes at least one metal layer and at least two dielectric layers. Each metal layer is located between two adjacent dielectric layers.

Specifically, the thermal insulation coating can be used for insulating external heat from entering the vehicle by reflecting infrared rays outside the vehicle, so that the temperature in the vehicle can be better controlled. It can be understood that in other possible implementations, the thermal insulation coating may also be disposed at other positions of the laminated glass 10, which is not limited in the present disclosure.

In an implementation, a first bus-bar and a second bus-bar that are electrically connected to the thermal insulation coating may be further disposed between the second surface 120 and the third surface 210. The thermal insulation coating has a heating power density of at least 600 W/m2 between the first bus-bar and the second bus-bar.

The first bus-bar and the second bus-bar are electrically connected to the thermal insulation coating respectively. When the first bus-bar and the second bus-bar are energized, the thermal insulation coating generates heat and can reach the heating power density of at least 600 W/*m2*. Therefore, the laminated glass 10 is heated to remove frost, fog, snow, etc., so as to ensure a clear field of vision of the driver in bad weather.

In an implementation, an anti-reflection coating or an anti-fingerprint coating is disposed on the fourth surface 220. It can be understood that since the fourth surface 220 is close to the inside of the vehicle, the anti-reflection coating prevents an obvious dashboard reflection on the laminated glass 10, so that the person in the vehicle can observe more clearly when looking out of the vehicle from the inside of the vehicle. The anti-fingerprint coating can ensure the cleanliness of the laminated glass 10, and stains such as fingerprints are not easily left, thereby ensuring a clear field of vision of the driver.

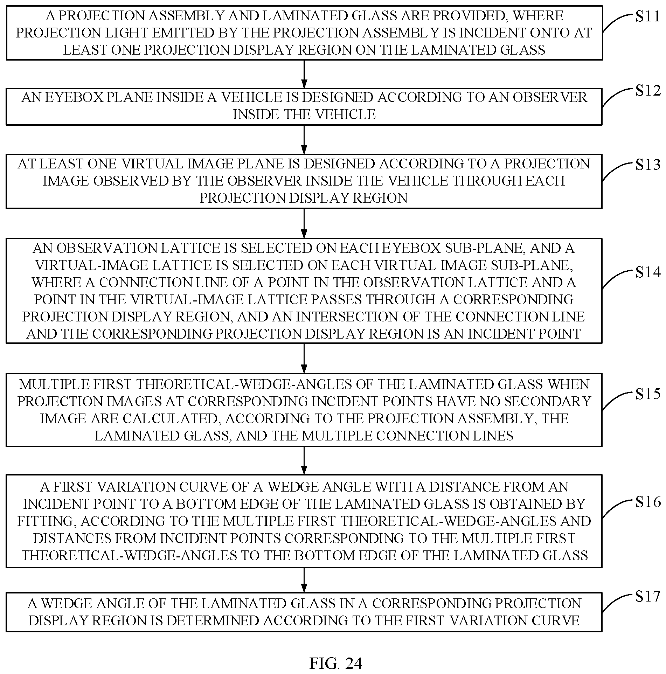

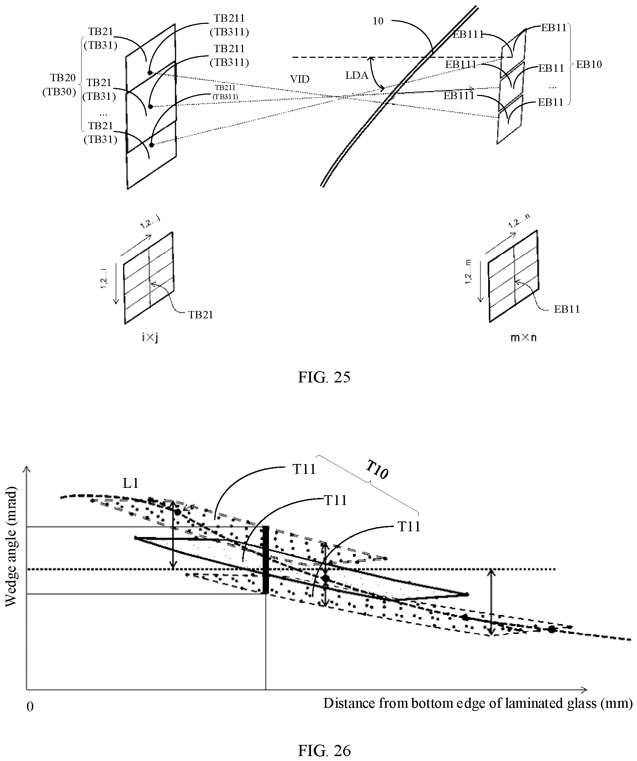

Reference can be made to FIG. 24, FIG. 25, and FIG. 26 together, where FIG. 24 is a flow chart of a design method for a head-up display system provided in an implementation of the present disclosure; FIG. 25 is a schematic view of the design method for a head-up display system provided in the implementation in FIG. 24; and FIG. 26 is a schematic view of a first variation curve in the design method for a head-up display system provided in the implementation in FIG. 24. In this implementation, the design method for a head-up display system 1 includes the following. An eyebox plane EB10 inside a vehicle is designed according to an observer inside the vehicle. The first projection-display-region 411 will be described below as an example. At least one virtual image plane (e.g., first virtual-image-plane TB20) is designed according to a projection image (e.g., a first projection image 4111) observed by the observer inside the vehicle through each projection display region 410 (e.g., a first projection-display-region 411).

The eyebox plane EB10 includes multiple eyebox sub-planes EB11 sequentially from high to low. The at least one first virtual-image-plane TB20 each includes multiple virtual image sub-planes (e.g., first virtual-image sub-planes TB21) sequentially from low to high. Each first virtual-image sub-plane TB21 corresponds to one eyebox sub-plane EB11. An observation lattice EB111 is selected on each eyebox sub-plane EB11. A virtual-image lattice (e.g., a first virtual-image-lattice TB211) is selected on each first virtual-image sub-plane TB21. A connection line of a point in the observation lattice EB111 and a point in the first virtual-image-lattice TB211 passes through a corresponding first projection-display-region 411, and an intersection of the connection line and the first projection-display-region 411 is an incident point. Multiple first theoretical-wedge-angles of the laminated glass 10 when first projection images 4111 at corresponding incident points have no secondary image are calculated, according to the projection assembly 20, the laminated glass 10, and the multiple connection lines. A first variation curve L1 of wedge angles with distances from incident points to a bottom edge 10b of the laminated glass is obtained by fitting, according to the multiple first theoretical-wedge-angles and distances from incident points corresponding to the multiple first theoretical-wedge-angles to the bottom edge 10b of the laminated glass. In addition, a wedge angle of the laminated glass 10 in a corresponding first projection-display-region 411 is determined according to the first variation curve L1.

In this implementation, the laminated glass 10 is used as a windshield of the vehicle and is applied to the head-up display system 1 of the vehicle. A design method for laminated glass 10 includes S11, S12, S13, S14, S15, S16, and S17. S11, S12, S13, S14, S15, S16, and S17 will be described in detail below.

S11, a projection assembly 20 and laminated glass 10 are provided. Projection light emitted by the projection assembly 20 is incident onto at least one projection display region 410 on the laminated glass 10.

S12, an eyebox plane EB10 inside a vehicle is designed according to an observer inside the vehicle.

S13, at least one virtual image plane is designed according to a projection image observed by the observer inside the vehicle through each projection display region 410.

In this implementation, the eyebox plane EB10 includes multiple eyebox sub-planes EB11 sequentially from high to low. The at least one first virtual-image-plane TB20 each includes multiple first virtual-image sub-planes TB21 sequentially from low to high. Each first virtual-image sub-plane TB21 corresponds to one eyebox sub-plane EB11. Specifically, the eyebox plane EB10 is used for simulating a plane on which the observer eye is located when the observer sits in a cab of the vehicle. The multiple eyebox sub-planes EB11 are used for simulating that the observer eye is at different heights, that is, the multiple eyebox sub-planes EB11 are used for simulating different viewing angles of the observer. The first virtual-image-plane TB20 is used for simulating a virtual image formed at the other side of the laminated glass 10 by reflecting the projected light on the laminated glass 10 to the eyebox plane EB10. The multiple eyebox sub-planes EB11 are respectively used for simulating virtual images formed at the other side of the laminated glass 10 by reflecting the projection light on the laminated glass 10 to the multiple eyebox sub-planes EB11 at different positions. Specifically, the multiple eyebox sub-planes EB11 and the multiple first virtual-image sub-planes TB21 are centrosymmetric in height. In other words, an eyebox sub-plane EB11 with the highest height corresponds to a first virtual-image sub-plane TB21 with the lowest height, and an eyebox sub-plane EB11 with the lowest height corresponds to a first virtual-image sub-plane TB21 with the highest height.

S14, an observation lattice EB111 is selected on each eyebox sub-plane EB11, and a virtual-image lattice is selected on each virtual image sub-plane. A connection line of a point in the observation lattice EB111 and a point in the virtual-image lattice passes through a corresponding projection display region 410. An intersection of the connection line and the corresponding projection display region 410 is an incident point.

In this implementation, each point in the observation lattice EB111 corresponds to a position of the observer eye simulated. Each point in the first virtual-image-lattice TB211 corresponds to a virtual image formed on the first virtual-image-plane TB20 by simulating reflection of the projection light on the laminated glass 10 to a certain point on the eyebox plane EB10. Specifically, each point in the first virtual-image-lattice TB211 corresponds to one or more points in the observation lattice EB111. In other words, at different positions on the eyebox plane EB10, the observer can see a virtual image that is at the same position on the first virtual-image-plane TB20. In addition, at the same position on the eyebox plane EB10, the observer can see virtual images that are at different positions on the first virtual-image-plane TB20.

S15, multiple first theoretical-wedge-angles of the laminated glass when projection images at corresponding incident points have no secondary image are calculated, according to the projection assembly 20, the laminated glass 10, and the multiple connection lines.

In this implementation, in each eyebox sub-plane EB11 and each first virtual-image sub-plane TB21 that are set in correspondence, an intersection of the laminated glass 10 and a connection line of each point in the observation lattice EB111 and each point in the first virtual-image-lattice TB211 is an incident point. A first theoretical-wedge-angle at a corresponding incident point is calculated, when a virtual image on the first virtual-image sub-plane TB21 and viewed by the observer from each point in the observation lattice EB111 has no secondary image. The number of incident points used for simulation calculation is the number of first theoretical-wedge-angles.

S16, a first variation curve L1 of wedge angles with distances from incident points to a bottom edge 10b of the laminated glass is obtained by fitting, according to the multiple first theoretical-wedge-angles and distances from incident points corresponding to the multiple first theoretical-wedge-angles to the bottom edge of the laminated glass.

In this implementation, the multiple first theoretical-wedge-angles present a discrete distribution with respect to the distance from the incident point to the bottom edge 10b of the laminated glass. Specifically, in an implementation, for each eyebox sub-plane EB11 and each first virtual-image sub-plane TB21 that are set in correspondence, multiple discrete sub-graphs T11 of the multiple first virtual-image sub-planes TB21 can be calculated, and then the multiple discrete sub-graphs T11 are collected in the same coordinate system to form a first discrete graph T10. The first variation curve L1 is obtained by performing function fitting on the first discrete graph T10 of the multiple first virtual-image sub-planes TB21. For example, the function may be, but is not limited to, a cubic, quartic, and quintic polynomial function, or a basic function such as an exponential function, a power function, or a logarithmic function, as well as a composite function composed thereof. The data curve can be fitted in software such as Microsoft Excel®, WPS®, MATLAB®, OriginPro®, etc. Since the observer can see multiple images at different distances or angles at a certain point on the laminated glass 10, there are multiple first theoretical-wedge-angles at the point. However, the wedge angle at a certain point on the laminated glass 10 can only have one value. In addition, in the direction from the bottom edge of the glass to the top edge of the glass, for each of other points with the same distance from the point to the bottom edge of the glass, there are also multiple first theoretical-wedge-angles. The wedge angle of the laminated glass 10 at a certain distance from the bottom edge of the laminated glass 10 is suitable to have one value. Therefore, it is necessary to appropriately select wedge angles at each incident point on the laminated glass 10 to reduce the secondary image phenomenon. By performing function fitting on the multiple first theoretical-wedge-angles, the wedge angle of the laminated glass 10 in the first projection-display-region 411 is less deviated from the multiple first theoretical-wedge-angles. Therefore, the secondary image phenomenon projected onto the first projection-display-region 411 of the laminated glass 10 is reduced, so as to improve the imaging quality of the laminated glass 10. In another implementation, for the multiple first theoretical-wedge-angles corresponding to each incident point, an average of a maximum and a minimum of the multiple first theoretical-wedge-angles corresponding to the incident point is calculated, and then averages of maximums and minimums of the multiple first theoretical-wedge-angles at various incident points are connected to form the first variation curve L1.

S17, a wedge angle of the laminated glass 10 in a corresponding projection display region 410 is determined according to the first variation curve L1.

In this implementation, the wedge angle of the laminated glass 10 in the corresponding first projection-display-region 411 is determined according to the first variation curve L1, so that the secondary image phenomenon in the first projection-display-region 411 of the laminated glass 10 is reduced. Specifically, by selecting and designing the first virtual-image-plane TB 20, the distribution of the multiple first theoretical-wedge-angles of the laminated glass 10 in the first projection-display-region 411 can be calculated, and the first variation curve L1 corresponding to the first projection-display-region 411 can be fitted. Therefore, the wedge angle of the laminated glass 10 in the corresponding first projection-display-region 411 can be determined.

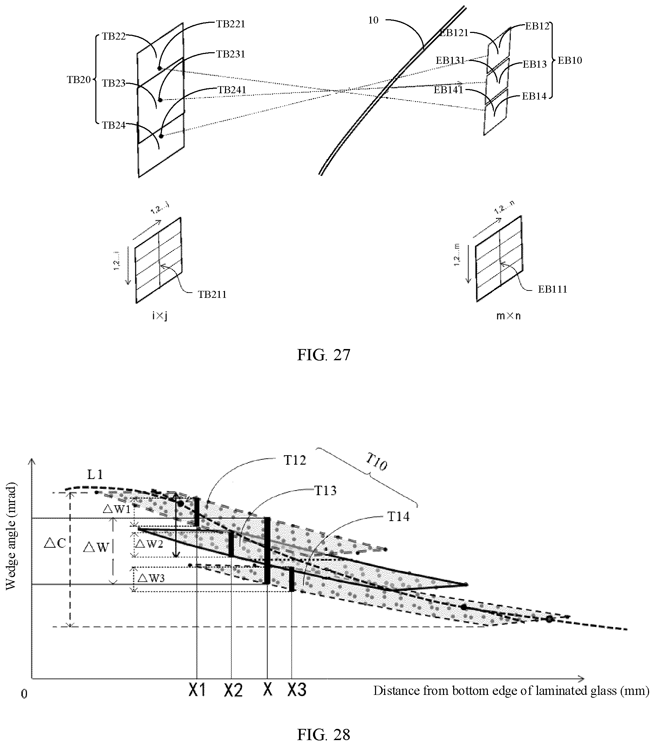

Reference can be made to FIG. 27, which is a schematic view of an eyebox plane and a first virtual-image-plane in the design method for a head-up display system provided in the implementation in FIG. 24. In this implementation, the eyebox plane EB10 includes a first eyebox-sub-plane EB12, a second eyebox-sub-plane EB13, and a third eyebox-sub-plane EB14 sequentially from high to low. The multiple first virtual-image sub-planes TB21 includes a first low virtual-image-plane TB22, a first middle virtual-image-plane TB23, and a first high virtual-image-plane TB24 sequentially from low to high. Selecting the observation lattice EB111 on each eyebox sub-plane EB11 and selecting the virtual-image lattice on each virtual image sub-plane include the following. A first observation sub-lattice EB121 of $m1*n1$ on the first eyebox-sub-plane EB12 is selected. A second observation sub-lattice EB131 of $m2*n2$ on the second eyebox-sub-plane EB13 is selected. A third observation sub-lattice EB141 of $m3*n3$ on the third eyebox-sub-plane EB14 is selected. Each *of m1, m2,* and *m3* is greater than or equal to 1, and is a natural number. Each of *n1, n2,* and *n3* is greater than or equal to 1, and is a natural number. In addition, a first low virtual-image-lattice TB221 of $i1*j1$ on the first low virtual-image-plane TB22 is selected. A first middle virtual-image-lattice TB231 of $i2*j2$ on the first middle virtual-image-plane TB23 is selected. A first high virtual-image-lattice TB241 of $i3*j3$ on the first high virtual-image-plane TB24 is selected. Each of *i1, i2,* and *i3* is greater than or equal to 1, and is a natural number. Each *of j1, j2,* and *j3* is greater than or equal to 1, and is a natural number.

In this implementation, the eyebox plane EB10 includes the first eyebox-sub-plane EB12, the second eyebox-sub-plane EB13, and the third eyebox-sub-plane EB14 sequentially from high to low. In other words, the eye position of the observer in the cab is simplified to three height positions, that is, high, middle, and low, thereby simplifying the design method for a head-up display system 1. Although the accuracy of calculation can be improved by selecting more eyebox planes EB10 at different positions, more eyebox planes EB10 may also increase the number of discrete sub-graphs T11 of the multiple first theoretical-wedge-angles, thereby increasing the calculation amount and difficulty of fitting the first variation curve L1.

In this implementation, S14 in the above implementation specifically includes S141 and S142. S141 and S142 will be described in detail below.

S141, a first observation sub-lattice EB121 of $m1*n1$ on the first eyebox-sub-plane EB12 is selected. A second observation sub-lattice EB131 of $m2*n2$ on the second eyebox-sub-plane EB13 is selected. A third observation sub-lattice EB141 of $m3*n3$ on the third eyebox-sub-plane EB14 is selected. Each of $m1, m2,$ and $m3$ is greater than or equal to 1, and is a natural number. Each of $n1, n2,$ and $n3$ is greater than or equal to 1, and is a natural number.

In this implementation, the first observation sub-lattice EB121 of $m1*n1$ on the first eyebox-sub-plane EB12 is selected, where $m1$ is greater than or equal to 1 and is a natural number, and $n1$ is greater than or equal to 1 and is a natural number. For example, $m1$ may be, but is not limited to, 3, 5, 8, etc., and $n1$ may be, but is not limited to, 3, 5, 8, etc. The second observation sub-lattice EB131 of $m2*n2$ on the second eyebox-sub-plane EB13 is selected, where $m2$ is greater than or equal to 1 and is a natural number, and $n2$ is greater than or equal to 1 and is a natural number. For example, $m2$ may be, but is not limited to, 3, 5, 8, etc., and $n2$ may be, but is not limited to, 3, 5, 8, etc. $m2$ is equal or unequal to $m1,$ and $n2$ is equal or unequal to $n1.$ The third observation sub-lattice EB141 of $m3*n3$ on the third eyebox-sub-plane EB14 is selected, where $m3$ is greater than or equal to 1 and is a natural number, and $n3$ is greater than or equal to 1 and is a natural number. For example, $m3$ may be, but is not limited to, 3, 5, 8, etc., and $n3$ may be, but is not limited to, 3, 5, 8, etc. $m3$ is equal or unequal to $m1$ or $m2.$ $n3$ is equal or unequal to $n1$ or $n2.$

S142, a first low virtual-image-lattice TB221 of $i1* j1$ on the first low virtual-image-plane TB22 is selected. A first middle virtual-image-lattice TB231 of $i2*j2$ on the first middle virtual-image-plane TB23 is selected. A first high virtual-image-lattice TB241 of $i3*j3$ on the first high virtual-image-plane TB24 is selected. Each of $i1, i2,$ and $i3$ is greater than or equal to 1, and is a natural number. Each of $j1, j2,$ and $j3$ is greater than or equal to 1, and is a natural number.

In this implementation, the first low virtual-image-lattice TB221 of $i1*j1$ on the first low virtual-image-plane TB22 is selected, where $i1$ is greater than or equal to 1 and is a natural number, and $j1$ is greater than or equal to 1 and is a natural number. For example, $i1$ may be, but is not limited to, 3, 5, 8, etc., and $j1$ may be, but is not limited to, 3, 5, 8, etc. The first middle virtual-image lattice TB231: $i2*j2$ on the first middle virtual-image-plane TB23 is selected, where $i2$ is greater than or equal to 1

and is a natural number, and $j2$ is greater than or equal to 1 and is a natural number. For example, $i2$ may be, but is not limited to, 3, 5, 8, etc., and $j2$ may be, but is not limited to, 3, 5, 8, etc. $i2$ is equal or unequal to $i1.j2$ is equal or unequal *to j1.* The first high virtual-image-lattice TB241of $i3*j3$ on the first high virtual-image-plane TB 24 is selected, where $i3$ is greater than or equal to 1 and is a natural number, and $j3$ is greater than or equal to 1 and is a natural number. For example, $i3$ may be, but is not limited to, 3, 5, 8, etc., and $j3$ may be, but is not limited to, 3, 5, 8, etc. $i3$ is equal or unequal to $i1$ or $i2.$ $j3$ is equal or unequal to $j1$ or $j2.$ It may be noted that $i1*j1$ is equal or unequal to $m1*n1, i2*j2$ is equal or unequal to $m2*n2,$ and $i3*j3$ is equal or unequal to $m3*n3.$

Reference can be made to FIG. 28, which is a schematic view of a first variation curve calculated by a design method for a head-up display system provided in an implementation of the present disclosure. In this implementation, calculating the multiple first theoretical-wedge-angles of the laminated glass when projection images at corresponding incident points have no secondary image, according to the projection assembly 20, the laminated glass 10, and the multiple connection lines includes the following. Multiple first theoretical wedge sub-angles of the laminated glass when a first projection image 4111 at an incident point corresponding to a connection line of each point in the first observation sub-lattice EB121 and each point in the first low virtual-image-lattice TB221 has no secondary image are calculated, according to the projection assembly 20, the laminated glass 10, and the connection line of each point in the first observation sub-lattice EB121 and each point in the first low virtual-image-lattice TB221. Multiple second theoretical wedge sub-angles of the laminated glass when a first projection image 4111 at an incident point corresponding to a connection line of each point in the second observation sub-lattice EB131 and each point in the first middle virtual-image-lattice TB231 has no secondary image are calculated, according to the projection assembly 20, the laminated glass 10, and the connection line of each point in the second observation sub-lattice EB131 and each point in the first middle virtual-image-lattice TB231. In addition, multiple third theoretical wedge sub-angles of the laminated glass when a projection image 4111 at an incident point corresponding to a connection line of each point in the third observation sub-lattice EB141 and each point in the first high virtual-image-lattice TB241 has no secondary image are calculated, according to the projection assembly 20, the laminated glass 10, and the connection line of each point in the third observation sub-lattice EB141 and each point in the first high virtual-image-lattice TB241.

In this implementation, S15 in the above implementation specifically includes S151, S152, and S153. S151, S152, and S153 will be described in detail below.

S151, multiple first theoretical wedge sub-angles of the laminated glass when a first projection image 4111 at an incident point corresponding to a connection line of each point in the first observation sub-lattice EB121 and each point in the first low virtual-image-lattice TB221 has no secondary image are calculated, according to the projection assembly 20, the laminated glass 10, and the connection line of each point in the first observation sub-lattice EB121 and each point in the first low virtual-image-lattice TB221.

In this implementation, a first discrete sub-graph T12 of the multiple first theoretical wedge sub-angles and the distance from the bottom edge 10b of the laminated glass can be obtained according to the multiple first theoretical wedge sub-angles.

S152, multiple second theoretical wedge sub-angles of the laminated glass when a first projection image 4111 at an incident point corresponding to a connection line of each point in the second observation sub-lattice EB131 and each point in the first middle virtual-image-lattice TB231 has no secondary image are calculated, according to the projection assembly 20, the laminated glass 10, and the connection line of each point in the second observation sub-lattice EB131 and each point in the first middle virtual-image-lattice TB231.

In this implementation, a second discrete sub-graph T13 of the multiple second theoretical wedge sub-angles and the distance from the bottom edge 10b of the laminated glass can be obtained according to the multiple second theoretical wedge sub-angles.

S153, multiple third theoretical wedge sub-angles of the laminated glass when a projection image 4111 at an incident point corresponding to a connection line of each point in the third observation sub-lattice EB141 and each point in the first high virtual-image-lattice TB241 has no secondary image are calculated, according to the projection assembly 20, the laminated glass 10, and the connection line of each point in the third observation sub-lattice EB141 and each point in the first high virtual-image-lattice TB241.

In this implementation, a third discrete sub-graph T14 of the multiple third theoretical wedge sub-angles and the distance from the bottom edge 10b of the laminated glass can be obtained according to the multiple third theoretical wedge sub-angles.

In this implementation, the first discrete sub-graph T12, the second discrete sub-graph T13, and the third discrete sub-graph T14 are calculated first, and then the first discrete sub-graph T12, the second discrete sub-graph T13, and the third discrete sub-graph T14 are collected to be the first discrete graph T10. The first discrete graph T10 can be optimized by optimizing the first discrete sub-graph T12, the second discrete sub-graph T13, and the third discrete sub-graph T14 respectively. For example, the second eyebox-sub-plane EB13 corresponding to the second discrete sub-graph T13 is used for simulating a viewing-angle plane where the observer eye is at the middle height of the cab. Generally, the height of the second eyebox-sub-plane EB13 is the most common height for the observer sitting in the cab. Therefore, the second eyebox-sub-plane EB13 is an eyebox plane EB10 that needs to eliminate the secondary image of the projection most. Therefore, the targeted optimization can be performed on the second discrete sub-graph T13, so that the wedge angle selected of the laminated glass 10 corresponding to the second eyebox-sub-plane EB13 is more accurate. For example, the number of selected points in the second observation sub-lattice EB131 and/or the first middle virtual-image lattice TB231 is increased, so that the number of third theoretical wedge sub-angles in the second discrete sub-graph T13 is increased, thereby improving the accuracy of fitting the first variation curve L1.

Referring to FIG. 28 again, in this implementation, a ratio of a maximum local range $\Delta W$ of the multiple first theoretical-wedge-angles to a global range $\Delta C$ of the multiple first theoretical-wedge-angles satisfies: $\Delta W/\Delta C \leq 0.9$.

In this implementation, the ratio of the maximum local range $\Delta W$ of the multiple first theoretical-wedge-angles to the global range $\Delta C$ of the multiple first theoretical-wedge-angles satisfy: $\Delta W/\Delta C \leq 0.9$, so that the dispersion degree of the multiple first theoretical-wedge-angles can be smaller, and thus the dispersion degree of the first discrete graph T10 can be smaller. Therefore, the smoothness of the first variation curve L1 is improved, that is, the slope of the first variation curve L1 is reduced, thereby reducing the ROC of the wedge angle of the laminated glass 10, and reducing the production difficulty of the laminated glass 10. It may be noted that the maximum local range $\Delta W$ of the multiple first theoretical-wedge-angles refers to the maximum among the local ranges, where the local range is a difference between the maximum and the minimum among the multiple first theoretical-wedge-angles at a certain position where the distance from the bottom edge 10b of the laminated glass is X. The global range $\Delta C$ of the multiple first theoretical-wedge-angles refers to a difference between the maximum and the minimum among all the first theoretical-wedge-angles.

A ratio of the maximum local range $\Delta W1$ of the multiple first theoretical wedge sub-angles to the global range $\Delta C$ of the multiple first theoretical-wedge-angles satisfy: $\Delta W1/\Delta C \leq 0.9$. A ratio of the maximum local range $\Delta W2$ of the multiple second theoretical wedge sub-angles to the global range $\Delta C$ of the multiple first theoretical-wedge-angles satisfy: $\Delta W2/\Delta C \leq 0.9$. A ratio of the maximum local range $\Delta W3$ of the multiple third theoretical wedge sub-angles to the global range $\Delta C$ of the multiple first theoretical-wedge-angles satisfy: $\Delta W/\Delta C \leq 0.9$. Thus, the dispersion degree of the first discrete graph T10 is smaller, so that the smoothness of the first variation curve L1 is increased, that is, the slope of the first variation curve L1 is reduced, thereby reducing the ROC of the wedge angle of the laminated glass 10, and reducing the production difficulty of the laminated glass 10.

In this implementation, the ratio of the maximum local range $\Delta W1$ of the multiple first theoretical wedge sub-angles to the global range $\Delta C$ of the multiple first theoretical-wedge-angles satisfy: $\Delta W1/\Delta C \leq 0.9$, so that the dispersion degree of the multiple first theoretical wedge sub-angles is smaller. The maximum local range $\Delta W1$ of the multiple first theoretical wedge sub-angles refers to the maximum among the first local sub-ranges, where the first local sub-range is a difference between the maximum and the minimum among the multiple first theoretical wedge sub-angles at a certain position where the distance from the bottom edge 10b of the laminated glass is X1.

In this implementation, the ratio of the maximum local range $\Delta W2$ of the multiple second theoretical wedge sub-angles to the global range $\Delta C$ of the multiple first theoretical-wedge-angles satisfy: $\Delta W2/\Delta C \leq 0.9$, so that the dispersion degree of the multiple second theoretical wedge sub-angles is smaller. The maximum local range $\Delta W2$ of the multiple second theoretical wedge sub-angles refers to the maximum among the second local sub-ranges, where the second local sub-range is a difference between the maximum and the minimum among the multiple second theoretical wedge sub-angles at a certain position where the distance from the bottom edge 10b of the laminated glass is X2.

In this implementation, a ratio of the maximum local range $\Delta W3$ of the multiple third theoretical wedge sub-angles to the global range $\Delta C$ of the multiple first theoretical-wedge-angles is: $\Delta W3/\Delta C \leq 0.9$, so that the dispersion degree of the multiple third theoretical wedge sub-angles is smaller. The maximum local range $\Delta W3$ of the multiple third theoretical wedge sub-angles refers to the maximum among the third local sub-ranges, where the third local sub-range is a difference between the maximum and the minimum among the multiple third theoretical wedge sub-angles at a certain position where the distance from the bottom edge 10b of the laminated glass is X3.

In an implementation, in a direction from the bottom edge 10b to the top edge 10a of the laminated glass 10, distances between multiple virtual image planes (e.g., first virtual-image-planes TB20) and the eyebox plane EB10 increase in sequence.

In this implementation, in the direction from the bottom edge 10b of the laminated glass 10 to the top edge 10a of the laminated glass 10, the distances between the multiple first virtual-image-planes TB20 and the eyebox plane EB10 increase in sequence. The multiple first projection-display-regions 411 are correspondingly designed on the laminated glass 10. Therefore, the observer eye can switch between the multiple first projection-display-regions 411 more smoothly when the observer sits in the cab.

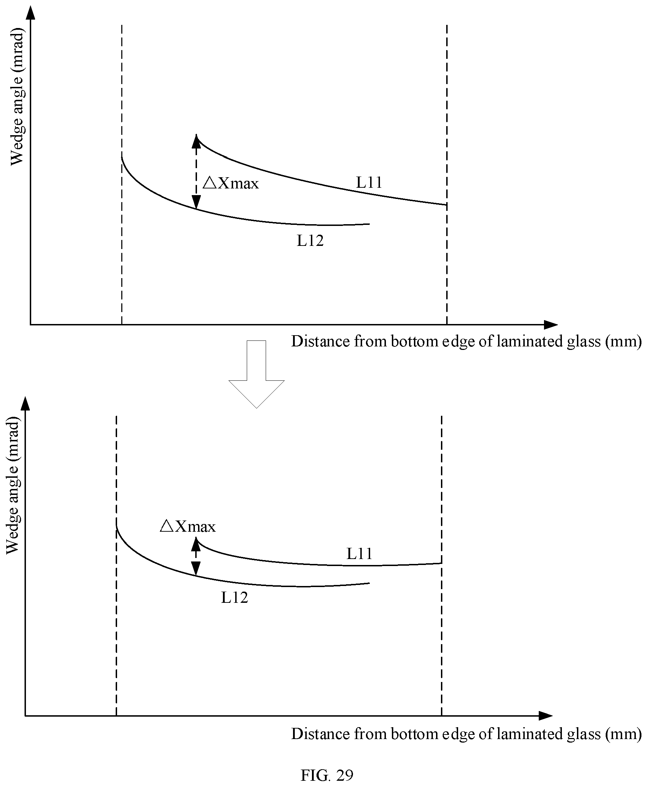

Reference can be made to FIG. 29, which is a schematic view of optimal design of two first variation curves in a design method for a head-up display system provided in an implementation of the present disclosure. In this implementation, the projection display region 410 includes at least two first projection-display-regions 411. At least two first variation curves L1 of wedge angles with distances from incident points to the bottom edge 10b of the laminated glass are obtained by fitting. When a maximum deviation $\Delta X max$ of two adjacent first variation curves L1 is greater than 0.15 mrad, after determining the wedge angles of the laminated glass 10 in the corresponding first projection-display-region 411 according to the first variation curve L1, the design method for a head-up display system 1 further includes the following. A distance between the eyebox plane EB10 and a virtual image plane (e.g., a first virtual-image-plane TB20) corresponding to one of the two adjacent first variation curves L1 is adjusted. Multiple new first theoretical-wedge-angles are recalculated. A new first variation curve L1 of wedge angles with distances from incident points to the bottom edge 10b of the laminated glass is obtained by fitting, according to the multiple new first theoretical-wedge-angles and distances from incident points corresponding to the multiple new first theoretical-wedge-angles to the bottom edge 10b of the laminated glass. In addition, whether a maximum deviation $\Delta X max$ between the new first variation curve L1 and the other of the two adjacent first variation curves L1 is greater than 0.15 mrad is determined. The above operations are repeated, if the maximum deviation $\Delta X max$ between the new first variation curve L1 and the other of the two adjacent first variation curves L1 is greater than 0.15 mrad. A wedge angle of the laminated glass 10 in the corresponding first projection-display-region 411 is determined according to the new first variation curve L1, if the maximum deviation $\Delta X max$ between the new first variation curve L1 and the other of the two adjacent first variation curves is not greater than 0.15 mrad.

In this implementation, when the two adjacent first variation curves L1 have overlapping portions, the maximum deviation $\Delta X max$ is equal to the maximum among differences between the two first variation curves L1 in the overlapping portions. When the two adjacent first variation curves L1 have no overlapping portions, the maximum deviation $\Delta X max$ is equal to the difference between wedge angles at the closest two ends of the two first variation curves L1.

When the maximum deviation $\Delta X max$ is greater than 0.15 mrad, it is necessary to adjust the distance between the eyebox plane EB10 and the first virtual-image-plane TB20 corresponding to any one of the two adjacent first variation curves L1, so that the maximum deviation $\Delta X max$ of the two first variation curves L1 designed is adjusted to be less than or equal to 0.15 mrad, or less than or equal to 0.10 mrad, or less than or equal to 0.08 mrad, or less than or equal to 0.05 mrad.

Specifically, after determining the wedge angles of the laminated glass 10 in the corresponding first projection-display-region 411 according to the first variation curve L1, the design method for a laminated glass 10 further includes S18, S19, S20, S21, and S22. S18, S19, S20, S21, and S22 will be described in detail below.

S18, a distance between the eyebox plane EB 10 and a virtual image plane corresponding to one of the two adjacent first variation curves L1 is adjusted.

By adjusting the distance between the eyebox plane EB10 and the first virtual-image-plane TB20 corresponding to one of the two adjacent first variation curves L1, the wedge angle required to eliminate the secondary image can be adjusted. Under the same condition, when the distance between the eyebox plane EB10 and the first virtual-image-plane TB20 corresponding to one of the two adjacent first variation curves L1 is larger, the wedge angle required to eliminate the secondary image is smaller. In this implementation, the distance between the first virtual-image-plane TB20 corresponding to one of the two adjacent first variation curves L1 (see L11 in FIG. 27) and the eyebox plane EB10 may be increased, and/or the distance between the first virtual-image-plane TB20 corresponding to the other of the two adjacent first variation curves L1 (see L12 in FIG. 27) and the eyebox plane EB10 may be reduced, so that the two adjacent first variation curves L1 are closer to the design target.

S19, multiple new first theoretical-wedge-angles are recalculated.

In this implementation, after adjusting the distance between the first virtual-image-plane TB20 and the eyebox plane EB10, the multiple first theoretical-wedge-angles calculated by means of the calculation method in the above implementation can fit a first variation curve L1 that is closer to the design target.

S20, a new first variation curve L1 of wedge angles with distances from incident points to the bottom edge 10b of the laminated glass is obtained by fitting, according to the multiple new first theoretical-wedge-angles and distances from incident points corresponding to the multiple new first theoretical-wedge-angles to the bottom edge 10b of the laminated glass.

S21, whether a maximum deviation $\Delta$Xmax between the new first variation curve L1 and the other of the two adjacent first variation curves L1 is greater than 0.15 mrad is determined.

In this implementation, whether the maximum deviation $\Delta$Xmax between the new first variation curve L1 and the other one of the two adjacent first variation curves L1 is greater than 0.15 mrad is determined. If the maximum deviation $\Delta$Xmax between the new first variation curve L1 and the other one of the two adjacent first variation curves L1 is greater than 0.15, S18 to S21 are repeated. If the maximum deviation $\Delta$Xmax between the new first variation curve L1 and the other one of the two adjacent first variation curves L1 is not greater than 0.15, step S22 is performed.

S22, a wedge angle of the laminated glass 10 in the corresponding first projection-display-region 411 is determined according to the new first variation curve L1.

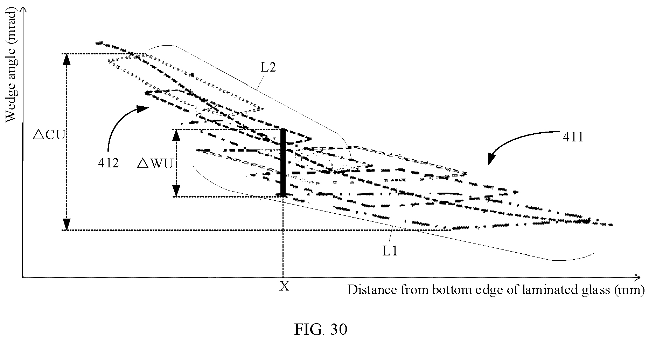

Reference can be made to FIG. 30, which is a schematic view of a second variation curve calculated by a design method for a head-up display system provided in an implementation of the present disclosure. In this implementation, the multiple projection display regions 410 include at least one second projection-display-region 412. A second virtual-image-plane TB30 is designed according to a second projection image 4121 observed by an observer inside the vehicle through each second projection-display-region 412. The second virtual-image-plane M30 includes multiple second virtual-image sub-planes TB31 sequentially from low to high. Each second virtual-image sub-plane TB31 corresponds to one eyebox sub-plane EB11. An observation lattice EB111 is selected on each eyebox sub-plane EB11, and a second virtual-image-lattice TB311 is selected on each second virtual-image sub-plane TB31. A connection line of a point in the observation lattice EB111 and a point in the second virtual-image-lattice TB311 passes through a corresponding second projection-display-region 412. An intersection of the connection line and the corresponding second projection-display-region 412 is an incident point. Multiple second theoretical-wedge-angles of the laminated glass 10 when projection images at corresponding incident points have no secondary image are calculated, according to the projection assembly 20, the laminated glass 10, and the multiple connection lines. A second variation curve L2 of wedge angles with distances from incident points to the bottom edge 10b of the laminated glass is obtained by fitting, according to the multiple second theoretical-wedge-angles and distances from incident points corresponding to the multiple second theoretical-wedge-angles to the bottom edge 10b of the laminated glass. In addition, a wedge angle of the laminated glass 10 in a corresponding second projection-display-region 412 is determined according to the second variation curve L2.

A collection of the multiple first theoretical-wedge-angles and the multiple second theoretical-wedge-angles has a maximum local range $\Delta$WU. The collection of the multiple first theoretical-wedge-angles and the multiple second theoretical-wedge-angles has a global range $\Delta$CU. A ratio of $\Delta$WU to $\Delta$CU satisfies: $\Delta WU / \Delta CU \leq 0.9$. Therefore, the overall dispersion degree of the collection of the multiple first theoretical-wedge-angles and the multiple second theoretical-wedge-angles can be smaller, thereby increasing the smoothness of the first variation curve L1 and the second variation curve L2. In other words, the overall slope of the first variation curve L1 and the second variation curve L2 is reduced, thereby reducing the overall ROC of the wedge angle of the laminated glass 10 and reducing the production difficulty of the laminated glass 10. It may be noted that the maximum local range $\Delta$WU of the collection of the multiple first theoretical-wedge-angles and the multiple second theoretical-wedge-angles refers to the maximum among collected local ranges, where the collected local range is a difference between the maximum and the minimum in the collection of the multiple first theoretical-wedge-angles and the multiple second theoretical-wedge-angles at a certain position where the distance from the bottom edge 10b of the laminated glass is X. The global range $\Delta$CU of the collection of the multiple first theoretical-wedge-angles and the multiple second theoretical-wedge-angles refers to a difference between the maximum and the minimum in the collection of all first theoretical-wedge-angles and all second theoretical-wedge-angles.

In this implementation, the wedge angle in the second projection-display-region 412 is designed to be different from the wedge angle in the first projection-display-region 411. For example, the first projection-display-region 411 is used for AR-HUD, and the second projection-display-region 412 used for W-HUD. Specifically, the design method for a head-up display system 1 further includes S31, S32, S33, S34, S35, and S36. S31, S32, S33, S34, S35, and S36 will be described in detail below.

S31, the multiple projection display regions 410 include at least one second projection-display-region 412. A second virtual-image-plane TB30 is designed according to a second projection image 4121 observed by an observer inside the vehicle through each second projection-display-region 412.

In this implementation, the height of the second virtual-image-plane TB30 is lower than the height of the first virtual-image-plane TB20.

S32, the second virtual-image-plane M30 includes multiple second virtual-image sub-planes TB31 sequentially from low to high. Each second virtual-image sub-plane TB31 corresponds to one eyebox sub-plane EB11.

In this implementation, the second virtual-image-plane TB30 is closer to the eyebox plane EB10 than the first virtual-image-plane TB20. The look down angle of the second virtual-image-plane TB30 is smaller than the look down angle of the first virtual-image-plane TB20.

S33, the second virtual-image-plane M30 includes multiple second virtual-image sub-planes TB31 sequentially from low to high. Each second virtual-image sub-plane TB31 corresponds to one eyebox sub-plane EB11.

In this implementation, the multiple eyebox sub-planes EB11 and the multiple second virtual-image sub-planes TB31 are centrosymmetric in height. In other words, an eyebox sub-plane EB11 with the highest height corresponds to a second virtual-image sub-plane TB31 with the lowest height, and an eyebox sub-plane EB11 with the lowest height corresponds to a second virtual-image sub-plane TB31 with the lowest height.

S34, an observation lattice EB111 is selected on each eyebox sub-plane EB11, and a second virtual-image-lattice TB311 is selected on each second virtual-image sub-plane TB31. A connection line of a point in the observation lattice EB111 and a point in the second virtual-image-lattice TB311 passes through a corresponding second projection-display-region 412. An intersection of the connection line and the corresponding second projection-display-region 412 is an incident point.

In this implementation, each point in the observation lattice EB111 corresponds to a position of the observer eye simulated. Each point in the second virtual-image-lattice TB311 corresponds to a virtual image formed on the second virtual-image-plane TB30 by simulating reflection of the projection light on the laminated glass 10 to a certain point on the eyebox plane EB10. Specifically, each point in the second virtual-image-lattice TB311 corresponds to one or more points in the observation lattice EB111. In other words, at different positions on the eyebox plane EB10, the observer can see a virtual image that is at the same position on second virtual-image-plane TB30. In addition, at the same position on the eyebox plane EB10, the observer can see virtual images at different positions on the second virtual-image-plane TB30.

S35, multiple second theoretical-wedge-angles of the laminated glass 10 when projection images at corresponding incident points have no secondary image are calculated, according to the projection assembly 20, the laminated glass 10, and the multiple connection lines.

In this implementation, in each eyebox sub-plane EB11 and each second virtual-image sub-plane TB31 that are set in correspondence, an intersection of the laminated glass 10 and a connection line of each point in the observation lattice EB111 and each point in the second virtual-image-lattice TB311 is an incident point. A second theoretical-wedge-angle at a corresponding incident point is calculated, when a virtual image on the second virtual-image sub-plane TB31 and viewed by the observer from each point in the observation lattice EB111 has no secondary image. The number of incident points used for simulation calculation is the number of second theoretical-wedge-angles.

S36, a wedge angle of the laminated glass 10 in a corresponding second projection-display-region 412 is determined according to the second variation curve L2.

In this implementation, the wedge angle of the laminated glass 10 in the corresponding second projection-display-region 412 is determined according to the second variation curve L2, so that the secondary image phenomenon in the second projection-display-region 412 of the laminated glass 10 is reduced. Specifically, by selecting and designing the second virtual-image-plane TB30, the distribution of the multiple second theoretical-wedge-angles of the laminated glass 10 in the second projection-display-region 412 can be calculated, and the second variation curve L2 corresponding to the second projection-display-region 412 can be fitted. Therefore, the wedge angle of the laminated glass 10 in the corresponding second projection-display-region 412 can be determined.

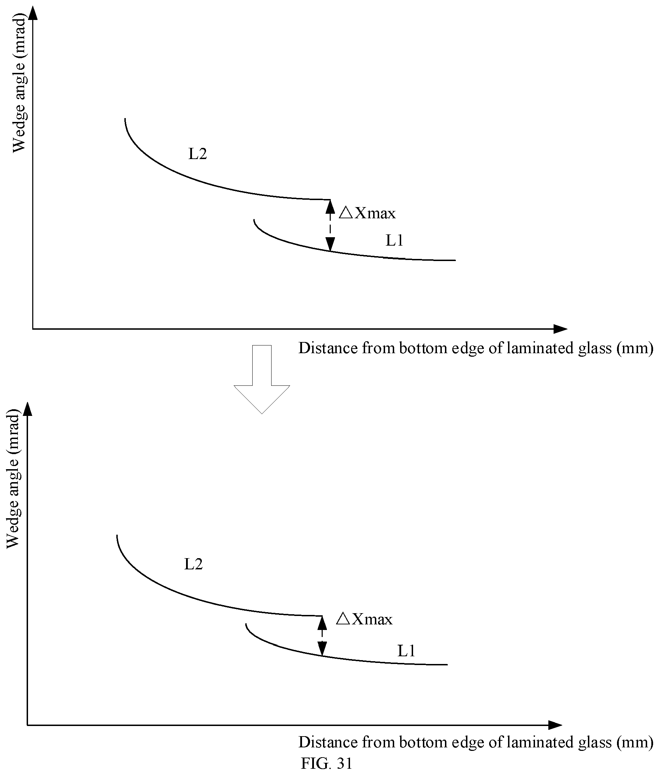

Reference can be made to FIG. 31, which is a schematic view of optimization of a first variation curve and a second variation curve provided in an implementation of the present disclosure. In this implementation, when the maximum deviation between the first variation curve L1 and the second variation curve L2 that are adjacent to each other is greater than 0.2 mrad, the distance between the eyebox plane EB10 and the first virtual-image-plane TB20 corresponding to the first variation curve L1 is reduced, and/or the distance between the eyebox plane EB10 and the second virtual-image-plane TB30 corresponding to the second variation curve L2 is increased.

In this implementation, when the first variation curve L1 and the second variation curve L2 that are adjacent to each other have overlapping portions, the maximum deviation ΔXmax is equal to the maximum among the differences between the first variation curve L1 and the second variation curve L2 in the overlapping portions. When the first variation curve L1 and the second variation curve L2 that adjacent to each other have no overlapping portions, the maximum deviation ΔXmax is equal to the difference between wedge angles at the closest two ends of the first variation curve L1 and the second variation curve L2.

When the maximum deviation ΔXmax is greater than 0.2 mrad, it is necessary to adjust the distance between the eyebox plane EB10 and the first virtual-image-plane TB20 corresponding to the first variation curve L1, and/or the distance between the eyebox plane EB10 and the second virtual-image-plane TB30 corresponding to the second variation curve L2, so that the maximum deviation ΔXmax of the first variation curve L1 and the second variation curve L2 that are designed and adjacent to each other is adjusted to be less than or equal to 0.2 mrad, or less than or equal to 0.15 mrad, or less than or equal to 0.10 mrad, or less than or equal to 0.08 mrad, or less than or equal to 0.05 mrad.

Specifically, in an implementation, by reducing the distance between the first virtual-image-plane TB20 and the eyebox plane EB10, the multiple first theoretical-wedge-angles designed become larger, so that the first variation curve L1 is closer to the second variation curve L2. Therefore, the maximum deviation between the first variation curve L1 and the second variation curve L2 is reduced, so that the first variation curve L1 and the second variation curve L2 that are adjacent to each other are closer to the design target. In another implementation, by increasing the distance between the second virtual-image-plane TB30 and the eyebox plane EB10, the multiple second theoretical-wedge-angles designed become smaller, so that the second variation curve L2 is closer to the first variation curve L1. Therefore, the maximum deviation between the first variation curve L1 and the second variation curve L2 is reduced, so that the first variation curve L1 and the second variation curve L2 that are adjacent to each other are closer to the design target. In yet another implementation, by reducing the distance between the first virtual-image-plane TB20 and the eyebox plane EB10, and increasing the distance between the second virtual-image-plane TB30 and the eyebox plane EB10, the multiple first theoretical-wedge-angles designed become larger and the multiple second theoretical-wedge-angles designed become smaller, so that the first variation curve L1 and the second variation curve L2 that are adjacent to each other are closer to each other, and thus the first variation curve L1 and the second variation curve L2 that are adjacent to each other are closer to the design target.

In an implementation, designing the at least one virtual image plane according to the projection image observed by the observer inside the vehicle through each projection display region 410 includes the following. A ratio of a height to width of each of the at least one virtual image plane (e.g., the first virtual-image-plane TB20) is set to be less than or equal to 0.5.

It can be understood that in this implementation, both the height of the first virtual-image-plane TB20 and the width of the first virtual-image-plane TB20 have influences on the wedge cross-sectional shape at different positions in the first projection-display-region 411, and the height of the first virtual-image-plane TB20 has a greater influence on the wedge cross-sectional shape at different positions in the first projection-display-region 411. Since the ratio of height to width of the first virtual-image-plane TB20 is less than or equal to 0.5, the height of the first virtual-image-plane TB20 is greatly reduced, thereby reducing the discrete state of the wedge-angle scatter data set.

In an implementation, the design method for a head-up display system further includes the following. A scatter distribution plot of theoretical wedge angles in an XY coordinate system is drawn, according to the multiple theoretical wedge angles and the distance from the incident point corresponding to each theoretical wedge angle to the bottom edge 10b of the laminated glass 10. The scatter distribution plot has an inclined median line. The median line has a projection length L on X axis. The height and width of the virtual image plane (e.g., the first virtual-image-plane TB20) have a projection length W on X axis in the scatter distribution plot, where $W/L \leq 1.2$.

In this implementation, W is the sum of Wm_C, Wm_L and Wm_R, and L is the corresponding projection length of L_mid or L_tall or L_short on X axis. In terms of each wedge-angle scatter-data-set block, when the block width in the direction perpendicular to the L_mid, L_tall, or L_short, the maximum local range of the wedge-angle scatter data set at the corresponding position of the laminated glass 10 is smaller. Thus, in the upward direction from the bottom edge 10b of the laminated glass 10, the ratio of the projection length of the first virtual-image-plane TB 20 on the laminated glass 10 to the projection length of the median line of the corresponding wedge-angle scatter data block on X axis is as small as possible, that is, W/L is as small as possible.

It can be understood that in this implementation, the ratio of the projection length of the first virtual-image-plane TB 20 on the laminated glass 10 to the projection length of the median line of the corresponding wedge-angle scatter data block on X axis satisfy $W/L \leq 1.2$. In other possible implementations, the value of W/L may be even smaller, which is not limited in the present disclosure.

In an implementation, the eyebox plane EB10 includes multiple eyebox sub-planes EB11 sequentially from high to low. The first virtual-image-plane TB20 includes multiple first virtual-image sub-planes TB21 sequentially from low to high. Each first virtual-image sub-planes TB21 corresponding to one eyebox sub-plane EB11. A connection line of a midpoint of each of the multiple eyebox sub-planes EB11 and a midpoint of a corresponding first virtual-image sub-plane TB21 is a primary optical axis. An intersection of primary optical axes corresponding to any two adjacent eyebox sub-planes EB11 of the multiple eyebox sub-planes EB11 is located outside the vehicle.

Specifically, for the influence of the intersection of the primary optical axes corresponding to any two adjacent eyebox sub-planes EB11 on the wedge angle of the laminated glass 10 at different positions, reference can be made to the above description, which will not be repeated here.

In an implementation, a distance between the intersection of the primary optical axes corresponding to any two adjacent eyebox sub-planes EB11 of the multiple eyebox sub-planes EB11 and a first surface 110 of the laminated glass 10 ranges from 10 mm to 1000 mm.

In this implementation, the distance between the intersection of the primary optical axes corresponding to any two adjacent eyebox sub-planes EB11 and the first surface 110 of the laminated glass 10 ranges from 10 mm to 1000 mm. Optionally, the distance between the intersection of the primary optical axes corresponding to any two adjacent eyebox sub-planes EB11 and the first surface 110 of the laminated glass 10 ranges from 40 mm to 800 mm. Further, the distance between the intersection of the primary optical axes corresponding to any two adjacent eyebox sub-planes EB11 and the first surface 110 of the laminated glass 10 ranges from 100 mm to 600 mm, which is not limited in the present disclosure.

In an implementation, the design method for a head-up display system further includes the following. A radius of curvature A of the projection display region 410 of the laminated glass 10 is set to change monotonously in a longitudinal direction or a transverse direction, where the radius of curvature R has an ROC of -20% to +20%.

It can be understood that the wedge angles where the images viewed from the multiple eyebox planes EB10 have no secondary image decrease as the radius of curvature R in the longitudinal direction or the transverse direction increases. By increasing the radius of curvature R in the longitudinal direction or the transverse direction, the wedge angle for eliminating the secondary image can be reduced, and the discrete state of the wedge-angle scatter data set can be reduced.

Although embodiments of the present disclosure have been illustrated and described above, it can be understood that the above embodiments are exemplary and cannot be understood as limitations to the present disclosure. Those of ordinary skill in the art can change, amend, replace, and modify the above embodiments within the scope of the present disclosure, and these modifications and improvements are also regarded as the protection scope of the present disclosure.

**Claims**

1. A head-up display system, comprising laminated glass and a projection assembly, wherein the laminated glass comprises:

   a first transparent substrate having a first surface and a second surface;
   a second transparent substrate having a third surface and a fourth surface; and
   an intermediate adhesive layer disposed between the first transparent substrate and the second transparent substrate, and used for adhering the second surface and the third surface;

   wherein

   the laminated glass has at least one projection display region having an upper edge and a lower edge, the at least one projection display region each has a wedge-shaped cross-sectional shape in which a thickness of the laminated glass at the upper edge is larger than a thickness of the laminated glass at the lower edge when the laminated glass is mounted on a vehicle, the at least one projection display region each has a section in which a wedge angle continuously nonlinearly monotonically decreases in a direction from the lower edge to the upper edge, and a ratio of a length of the section to a length of each of the at least one projection display region is not less than 70%; and
   the projection assembly comprises at least one projection light-source capable of projecting onto the at least one projection display region, and projection light emitted by the at least one projection light-source is incident onto the at least one projection display region to form a projection image.

2. The head-up display system of claim 1, wherein a maximum rate of change (ROC) of continuous non-linear monotonic decrease of the wedge angle in each of the at least one projection display region satisfies: ROC ≤ 0.3 mrad/100 mm; or ROC ≤ 0.2 mrad/100 mm; or ROC ≤ 0.1 mrad/100 mm; or ROC ≤ 0.05 mrad/100 mm.

3. The head-up display system of claim 1, wherein the section has a measured wedge angle at any point in the section, measured wedge angles at all points in the section are fitted to obtain an actual wedge-angle fitting curve, the at least one projection display region has a plurality of theoretical wedge angles for eliminating secondary images at any point in the at least one projection display region, a plurality of theoretical wedge angles at all points in each of the at least one projection display region are fitted to obtain a first variation curve, and a maximum deviation between the actual wedge-angle fitting curve and a part of the first variation curve corresponding to the actual wedge-angle fitting curve is less than or equal to 0.15 mrad.

4. The head-up display system of claim 3, wherein the actual wedge-angle fitting curve and the first variation curve each conform to a second-order to fifth-order function.

5. The head-up display system of claim 3, wherein a slope of a tangent at any point of the actual wedge-angle fitting curve continuously decreases in the direction from the lower edge to the upper edge.

6. The head-up display system of claim 3, wherein a slope of a tangent at any point of the actual wedge-angle fitting curve continuously increases in the direction from the lower edge to the upper edge.

7. The head-up display system of claim 3, wherein a slope of a tangent at any point of the actual wedge-angle fitting curve continuously increases and then continuously decreases in the direction from the lower edge to the upper edge.

8. The head-up display system of claim 3, wherein a ratio of a maximum local range $\Delta W$ of the plurality of theoretical wedge angles to a global range $\Delta C$ of the plurality of theoretical wedge angles satisfies: $\Delta W/\Delta C \le 0.9$.

9. The head-up display system of claim 1, wherein the laminated glass has a plurality of projection display regions, the plurality of projection display regions comprise at least one first projection-display-region, the projection light emitted by the at least one projection light-source is incident onto the at least one first projection-display-region to form a first projection image, and the first projection image has a virtual image distance $VID1$ of 7 m to 100 m.

10. The head-up display system of claim 9, wherein the plurality of projection display regions further comprise at least one second projection-display-region, the at least one projection light-source is incident onto the at least one second projection-display-region to form a second projection image, and the second projection image has a virtual image distance $VID2$ of 1 m to 6 m.

11. The head-up display system of claim 10, wherein the first projection image has a first look-down-angle $LDA1$ and a first virtual-image-distance $VID1$, the second projection image has a second look-down-angle $LDA2$ and a second virtual-image-distance $VID2$, and when the first projection-display-region is disposed adjacent to the second projection-display-region in a direction from a bottom edge to a top edge, $LDA1$ and $LDA2$ satisfy: $2° \le LDA1\text{-}LDA2 \le 4.5°$, or $2.5° \le LDAI\text{-}LDA2 \le 3.5°$, and $VID1$ and $VID2$ satisfy: $2 \le VID1/VID2 \le 50$, or $2.5 \le VID1/VID2 \le 10$.

12. The head-up display system of claim 10, wherein the first projection-display-region has a wedge angle ranging from 0 mrad to 0.5 mrad, and the second projection-display-region has a wedge angle ranging from 0.1 mrad to 0.8 mrad.

13. The head-up display system of claim 9, further defining a virtual eyebox plane located inside the vehicle and at least one virtual image plane located outside the vehicle, wherein each of the plurality of projection display regions corresponds to one virtual image plane, and a ratio of height to width of each of the at least one virtual image plane is less than or equal to 0.5.

14. The head-up display system of claim 13, wherein an angle between each of the at least one virtual image plane and the eyebox plane is $\le 10°$.

15. The head-up display system of claim 13, wherein the eyebox plane comprises a plurality of eyebox sub-planes sequentially from high to low, the at least one virtual image plane each comprises a plurality of virtual image sub-planes sequentially from low to high, each virtual image sub-plane corresponds to one eyebox sub-plane, a connection line of a midpoint of a eyebox sub-plane and a midpoint of a corresponding first virtual-image sub-plane is a primary optical axis, and an intersection of primary optical axes corresponding to any two adjacent eyebox sub-planes is located outside the vehicle.

16. The head-up display system of claim 15, wherein a distance between the intersection of the primary optical axes corresponding to any two adjacent eyebox sub-planes and the first surface of the laminated glass ranges from 10 mm to 1000 mm.

17. The head-up display system of claim 1, wherein a radius of curvature R of each of the at least one projection display region changes monotonously in a longitudinal direction and/or a transverse direction, and the radius of curvature $R$ has an ROC of-20% to +20%.

18. The head-up display system of claim 16, wherein the radius of curvature R in the longitudinal direction is greater than or equal to 5000 mm, and the radius of curvature R in the transverse direction ranges from 1500 mm to 4000 mm.

19. The head-up display system of claim 1, wherein the laminated glass has a functional region for sensor-signal transmission, and the functional region has a wedge-shaped cross-sectional shape in which a wedge angle is constant or linearly variable.

20. A design method for a head-up display system, comprising:

providing a projection assembly and laminated glass, wherein projection light emitted by the projection assembly is incident onto at least one projection display region on the laminated glass;
designing an eyebox plane inside a vehicle according to an observer inside the vehicle;
designing at least one virtual image plane according to a projection image observed by the observer inside the vehicle through each of the at least one projection display region; wherein the eyebox plane comprises a plurality of eyebox sub-planes sequentially from high to low, and the at least one virtual image plane each comprises a plurality of virtual image sub-planes sequentially from low to high, wherein each virtual image sub-plane corresponds to one eyebox sub-plane;
selecting an observation lattice on each eyebox sub-plane, and selecting a virtual-image lattice on each virtual image sub-plane, wherein a connection line of a point in the observation lattice and a point in the virtual-image lattice passes through a corresponding projection display region of the at least one projection display region, and an intersection of the connection line and the corresponding projection display region is an incident point;
calculating a plurality of first theoretical-wedge-angles of the laminated glass when projection images at corresponding incident points have no secondary image, according to the projection assembly, the laminated glass, and a plurality of connection lines;
obtaining a first variation curve of wedge angles with distances from incident points to a bottom edge of the laminated glass by fitting, according to the plurality of first theoretical-wedge-angles and distances from incident points corresponding to the plurality of first theoretical-wedge-angles to the bottom edge of the laminated glass; and
determining a wedge angle of the laminated glass in a corresponding projection display region of the at least one projection display region according to the first variation curve.

21. The design method for a head-up display system of claim 20, wherein the eyebox plane comprises a first eyebox-sub-plane, a second eyebox-sub-plane, and a third eyebox-sub-plane sequentially from high to low; and the plurality of virtual image sub-planes comprise a first low virtual-image-plane, a first middle virtual-image-plane, and a first high virtual-image-plane sequentially from low to high; and selecting the observation lattice on each eyebox sub-plane and selecting the virtual-image lattice on each virtual image sub-plane comprise:

selecting a first observation sub-lattice of $ml*nl$ on the first eyebox-sub-plane, selecting a second observation sub-lattice of $m2*n2$ on the second eyebox-sub-plane, and selecting a third observation sub-lattice of $m3*n3$ on the third eyebox-sub-plane, wherein each of $m1, m2,$ and $m3$ is greater than or equal to 1 and is a natural number, and each of $n1, n2,$ and $n3$ is greater than or equal to 1 and is a natural number; and
selecting a first low virtual-image-lattice of $i1*j1$ on the first low virtual-image-plane, selecting a first middle virtual-image-lattice of $i2*j2$ on the first middle virtual-image-plane, and selecting a first high virtual-image-lattice of $i3*j3$ on the first high virtual-image-plane, wherein each of $i1, i2,$ and $i3$ is greater than or equal to 1 and is a natural number, and each of $jl, j2,$ and $j3$ is greater than or equal to 1 and is a natural number.

22. The design method for a head-up display system of claim 21, wherein calculating the plurality of first theoretical-wedge-angles of the laminated glass when the projection images at the corresponding incident points have no secondary image, according to the projection assembly, the laminated glass, and the plurality of connection lines comprises:

calculating a plurality of first theoretical wedge sub-angles of the laminated glass when a projection image at an incident point corresponding to a connection line of each point in the first observation sub-lattice and each point in the first low virtual-image-lattice has no secondary image, according to the projection assembly, the laminated glass, and the connection line of each point in the first observation sub-lattice and each point in the first low virtual-image-lattice;
calculating a plurality of second theoretical wedge sub-angles of the laminated glass when a projection image at an incident point corresponding to a connection line of each point in the second observation sub-lattice and each point in the first middle virtual-image-lattice has no secondary image, according to the projection assembly, the laminated glass, and the connection line of each point in the second observation sub-lattice and each point in the first middle virtual-image-lattice; and

calculating a plurality of third theoretical wedge sub-angles of the laminated glass when a projection image at an incident point corresponding to a connection line of each point in the third observation sub-lattice and each point in the first high virtual-image-lattice has no secondary image, according to the projection assembly, the laminated glass, and the connection line of each point in the third observation sub-lattice and each point in the first high virtual-image-lattice.

23. The design method for a head-up display system of claim 20, wherein a ratio of a maximum local range $\Delta W$ of the plurality of first theoretical-wedge-angles to a global range $\Delta C$ of the plurality of first theoretical-wedge-angles satisfies: $\Delta W/\Delta C \leq 0.9$.

24. The design method for a head-up display system of claim 20, wherein the at least one virtual image planes is implemented as a plurality of virtual image planes, and in a direction from the bottom edge of the laminated glass to a top edge of the laminated glass, distances between the plurality of virtual image planes and the eyebox plane increase in sequence.

25. The design method for a head-up display system of claim 20, wherein the projection display region comprises at least two first projection-display-regions, at least two first variation curves of wedge angles with distances from incident points to the bottom edge of the laminated glass are obtained by fitting, and when a maximum deviation of two adjacent first variation curves is greater than 0.15 mrad, after determining the wedge angles of the laminated glass in the corresponding first projection-display-region according to the first variation curve, the design method for a head-up display system further comprises:

adjusting a distance between the eyebox plane and a virtual image plane corresponding to one of the two adjacent first variation curves;
recalculating a plurality of new first theoretical-wedge-angles;
obtaining a new first variation curve of wedge angles with distances from incident points to the bottom edge of the laminated glass by fitting, according to the plurality of new first theoretical-wedge-angles and distances from incident points corresponding to the plurality of new first theoretical-wedge-angles to the bottom edge of the laminated glass; and
determining whether a maximum deviation between the new first variation curve and the other of the two adjacent first variation curves is greater than 0.15 mrad;
repeating the above operations, if the maximum deviation between the new first variation curve and the other of the two adjacent first variation curves is greater than 0.15 mrad; or
determining a wedge angle of the laminated glass in the corresponding projection display region of the at least one projection display region according to the new first variation curve, if the maximum deviation between the new first variation curve and the other of the two adjacent first variation curves is not greater than 0.15 mrad.

26. The design method for a head-up display system of claim 20, wherein designing the at least one virtual image plane according to the projection image observed by the observer inside the vehicle through each of the at least one projection display region comprises:
setting a ratio of height to width of each of the at least one virtual image plane to be less than or equal to 0.5.

27. The design method for a head-up display system of claim 20, further comprising:

drawing a scatter distribution plot of theoretical wedge angles in an XY coordinate system, according to the plurality of first theoretical-wedge-angles and the distance from the incident point corresponding to each of the plurality of first theoretical-wedge-angles to a lower edge of the laminated glass; wherein
the scatter distribution plot has an inclined median line, the median line has a projection length L on X axis, and a height of each of the at least one virtual image plane and a width of each of the at least one virtual image plane have a projection length W on X axis in the scatter distribution plot, where W/L $\leq$ 1.2.

28. The design method for a head-up display system of claim 20, wherein a connection line of a midpoint of each of the plurality of eyebox sub-planes and a midpoint of a corresponding virtual image sub-plane is a primary optical axis, and an intersection of primary optical axes corresponding to any two adjacent eyebox sub-planes of the plurality of eyebox sub-planes is located outside the vehicle.

29. The design method for a head-up display system of claim 28, wherein a distance between the intersection of the primary optical axes corresponding to any two adjacent eye sub-boxes of the plurality of eyebox sub-planes and a first surface of the laminated glass ranges from 10 mm to 1000 mm.

**30.** The design method for a head-up display system of claim 20, further comprising:

setting a radius of curvature *R* of each of the at least one projection display region of the laminated glass to change monotonously in a longitudinal direction or a transverse direction, wherein the radius of curvature *R* has an ROC of -20% to +20%.

FIG. 1

FIG. 2

1

10

EB10

411

4111

20

FIG. 3

Wedge angle (mrad)

410

α

K1

430

L1

420

10b

0

Distance from bottom edge of laminated glass (mm)

FIG. 4

FIG. 5

FIG. 6

FIG. 7

FIG. 8

FIG. 9

FIG. 10

FIG. 11

FIG. 12

1

10

EB10

412

4121

20

FIG. 13

1

412

411

410

411

412

212

211

211

212

20

FIG. 14

FIG. 15

FIG. 16

FIG. 17

FIG. 18

Distance from bottom edge of laminated glass (mm)

FIG. 19

Section line of
laminated glass

TB_R₁C₁'

TB_R₁C₍ⱼ₊₁₎/₂

Viewed from the
outside of vehicle

TB_R₁C₁

TB_R₁Cⱼ

TB_R₁C₍ⱼ₊₁₎/₂

TB_R₁Cⱼ'

FIG. 20

Variable wedge angle

Short

L_short

Wedge angle (mrad)

Mid

L_mid

Tall

L_tall

Distance from bottom edge of laminated glass (mm)

FIG. 21

FIG. 22

FIG. 23

A PROJECTION ASSEMBLY AND LAMINATED GLASS ARE PROVIDED, WHERE PROJECTION LIGHT EMITTED BY THE PROJECTION ASSEMBLY IS INCIDENT ONTO AT LEAST ONE PROJECTION DISPLAY REGION ON THE LAMINATED GLASS — S11

AN EYEBOX PLANE INSIDE A VEHICLE IS DESIGNED ACCORDING TO AN OBSERVER INSIDE THE VEHICLE — S12

AT LEAST ONE VIRTUAL IMAGE PLANE IS DESIGNED ACCORDING TO A PROJECTION IMAGE OBSERVED BY THE OBSERVER INSIDE THE VEHICLE THROUGH EACH PROJECTION DISPLAY REGION — S13

AN OBSERVATION LATTICE IS SELECTED ON EACH EYEBOX SUB-PLANE, AND A VIRTUAL-IMAGE LATTICE IS SELECTED ON EACH VIRTUAL IMAGE SUB-PLANE, WHERE A CONNECTION LINE OF A POINT IN THE OBSERVATION LATTICE AND A POINT IN THE VIRTUAL-IMAGE LATTICE PASSES THROUGH A CORRESPONDING PROJECTION DISPLAY REGION, AND AN INTERSECTION OF THE CONNECTION LINE AND THE CORRESPONDING PROJECTION DISPLAY REGION IS AN INCIDENT POINT — S14

MULTIPLE FIRST THEORETICAL-WEDGE-ANGLES OF THE LAMINATED GLASS WHEN PROJECTION IMAGES AT CORRESPONDING INCIDENT POINTS HAVE NO SECONDARY IMAGE ARE CALCULATED, ACCORDING TO THE PROJECTION ASSEMBLY, THE LAMINATED GLASS, AND THE MULTIPLE CONNECTION LINES — S15

A FIRST VARIATION CURVE OF A WEDGE ANGLE WITH A DISTANCE FROM AN INCIDENT POINT TO A BOTTOM EDGE OF THE LAMINATED GLASS IS OBTAINED BY FITTING, ACCORDING TO THE MULTIPLE FIRST THEORETICAL-WEDGE-ANGLES AND DISTANCES FROM INCIDENT POINTS CORRESPONDING TO THE MULTIPLE FIRST THEORETICAL-WEDGE-ANGLES TO THE BOTTOM EDGE OF THE LAMINATED GLASS — S16

A WEDGE ANGLE OF THE LAMINATED GLASS IN A CORRESPONDING PROJECTION DISPLAY REGION IS DETERMINED ACCORDING TO THE FIRST VARIATION CURVE — S17

FIG. 24

FIG. 25

FIG. 26

FIG. 27

FIG. 28

FIG. 29

FIG. 30

FIG. 31

## INTERNATIONAL SEARCH REPORT

| | International application No. |
|---|---|
| | **PCT/CN2022/095074** |

**A.    CLASSIFICATION OF SUBJECT MATTER**

G02B 27/01(2006.01)i;   B32B 17/10(2006.01)i

According to International Patent Classification (IPC) or to both national classification and IPC

**B.    FIELDS SEARCHED**

Minimum documentation searched (classification system followed by classification symbols)

G02B; B32B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 抬头显示, 夹层玻璃, 投影显示区, 楔形, 曲线, 变化率, 眼盒面, 虚像面, 虚像点阵, Head Up Display, HUD, laminated glass, projection display area, eye box area, virtual image surface

**C.    DOCUMENTS CONSIDERED TO BE RELEVANT**

| Category* | Citation of document, with indication, where appropriate, of the relevant passages | Relevant to claim No. |
|---|---|---|
| Y | CN 113968053 A (FUYAO GLASS INDUSTRY GROUP CO., LTD.) 25 January 2022 (2022-01-25)<br>description, paragraphs [0003]-[0081], and figures 1 and 12 | 1, 2, 9-12, 17, 19 |
| Y | CN 106489096 A (SAINT-GOBAIN GLASS FRANCE S.A.) 08 March 2017 (2017-03-08)<br>description, paragraphs [0007]-[0075], and figures 1-4 | 1, 2, 9-12, 17, 19 |
| A | CN 107703633 A (SUZHOU CARROBOT AUTOMOBILE ELECTRONIC TECHNOLOGY CO., LTD.) 16 February 2018 (2018-02-16)<br>entire document | 1-30 |
| A | CN 101888927 A (SAINT-GOBAIN GLASS FRANCE S.A.) 17 November 2010 (2010-11-17)<br>entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **15 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/095074**

| Patent document cited in search report | | | Publication date (day/month/year) | Patent family member(s) | | | Publication date (day/month/year) |
|---|---|---|---|---|---|---|---|
| CN | 113968053 | A | 25 January 2022 | None | | | |
| CN | 106489096 | A | 08 March 2017 | None | | | |
| CN | 107703633 | A | 16 February 2018 | None | | | |
| CN | 101888927 | A | 17 November 2010 | CN | 101888927 | B | 29 May 2013 |

Form PCT/ISA/210 (patent family annex) (January 2015)